# EUROPÄISCHE PATENTSCHRIFT

(11) **EP 0 721 299 B1**
(45) Veröffentlichungstag und Bekanntmachung des Hinweises auf die Patenterteilung: **02.12.1998**
(21) Anmeldenummer: 94928789.0
(22) Anmeldetag: 19.09.1994
(51) Int. Cl.: A01N 47/36

(54) **NEUE MISCHUNGEN AUS HERBIZIDEN UND ANTIDOTS**
NEW MIXTURES OF HERBICIDES AND ANTIDOTES
NOUVEAUX MELANGES D'HERBICIDES ET D'ANTIDOTES

(30) Priorität: 30.09.1993 DE 4333249
(43) Veröffentlichungstag der Anmeldung: 17.07.1996
(73) Patentinhaber: Hoechst Schering AgrEvo GmbH, 13509 Berlin (DE)
(72) Erfinder: WILLMS, Lothar, D-65719 Hofheim (DE); BIERINGER, Hermann, D-65817 Eppstein (DE); HACKER, Erwin, D-65239 Hochheim am Main (DE); KEHNE, Heinz, D-65719 Hofheim am Taunus (DE)
(86) Internationale Anmeldenummer: EP9403127
(87) Internationale Veröffentlichungsnummer: WO9508919

(56) Entgegenhaltungen:
- EP-A- 0 127 469
- EP-A- 0 182 740
- EP-A- 0 492 366
- EP-A- 0 492 367
- EP-A- 0 509 433
- EP-A- 0 558 448
- EP-A- 0 582 198
- WO-A-92/13845
- WO-A-93/17016
- US-A- 4 566 898
- US-A- 4 645 527

## Beschreibung

Die Erfindung betrifft das technische Gebiet der Pflanzenschutzmittel, insbesondere Wirkstoff-Antidot-Kombinationen (oder Wirkstoff-Safener-Kombinationen), die hervorragend für den Einsatz gegen konkurrierende Schadpflanzen in Nutzpflanzenkulturen geeignet sind.

Einige neuere herbizide Wirkstoffe zeigen sehr gute anwendungstechnische Eigenschaften und können in sehr kleinen Aufwandmengen gegen ein breites Spektrum von grasartigen und breitblättrigen Unkräutern eingesetzt werden.

Jedoch sind viele der hochwirksamen Wirkstoffe nicht voll verträglich (selektiv) in einigen wichtigen Kulturpflanzen, wie Mais, Reis oder Getreide, so daß ihrem Einsatz enge Grenzen gesetzt sind. Sie können deshalb in manchen Kulturen überhaupt nicht oder nur in sehr geringen Aufwandmengen eingesetzt werden, die nicht die erwünschte breite herbizide Wirksamkeit gegenüber Schadpflanzen gewährleisten. Speziell können viele Herbizide der weiter unten definierten Formel (A) nicht vollständig selektiv gegen Schadpflanzen in Mais, Reis, Getreide oder einigen anderen Kulturen eingesetzt werden.

Aus EP-A-0492367 ist bekannt, die Phytotoxizität von Sulfonylharnstoff- oder Imidazolinonherbiziden zu reduzieren, indem man sie zusammen mit Phenylpyrazol-(oder -pyrazolin- oder -triazol-)-carbonsäure-derivaten oder mit Benzylisoxazolin-carbonsäurederivaten oder Chinolin-8-oxyalkancarbonsäure-derivaten anwendet. In EP-A-0509433 und EP-A-0492366 sind außerdem Verbindungen aus der Reihe der Derivate der 5-Phenylisoxazolin-3-carbonsäure bzw. (5-Chlorchinolin-8-oxy)-alkancarbonsäure als Safener für unterschiedliche Herbizide, unter anderem Sulfonylharnstoffe, beschrieben.

Ganz unerwartet haben unsere neuen experimentellen Arbeiten gezeigt, daß Kulturpflanzen, wie Mais, Reis, Weizen, Gerste und andere, vor unerwünschten Schäden der Herbizide (A) besonders effektiv geschützt werden können, wenn sie zusammen mit bestimmten Verbindungen (B) ausgebracht werden, die als Herbizid-Antidots oder Safener wirken.
Gegenstand der Erfindung sind daher Herbizid-Safener-Kombinationen, beispielsweise in Form von herbiziden Mitteln, enthaltend
A) mindestens einen herbiziden Wirkstoff aus der Gruppe der substituierten Phenylsulfonylharnstoffe der Formel (A) und deren Salze, 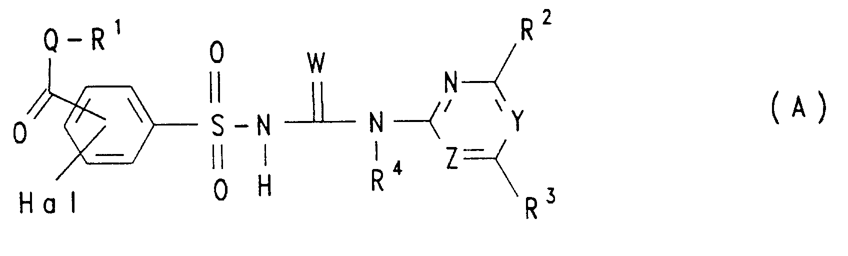 worin
   - Q: Sauerstoff, Schwefel oder -N(R)-, wobei R = H, (C₁-C₄)-Alkyl oder (C₁-C₄)-Alkoxy ist, vorzugsweise O oder S, insbesondere O;
   - W: Sauerstoff oder Schwefel, vorzugsweise O;
   - Y, Z: unabhängig voneinander CH oder N, wobei Y und Z nicht gleichzeitig CH sind, vorzugsweise Y = CH oder N und Z = N;
   - R¹: Wasserstoff; (C₁-C₁₂)-Alkyl; (C₂-C₁₀)-Alkenyl; (C₂-C₁₀)-Alkinyl; (C₁-C₆)-Alkyl, das ein- oder mehrfach durch gleiche oder verschiedene Reste aus der Gruppe Halogen, (C₁-C₄)-Alkoxy, (C₁-C₄)-Alkylthio, -CN, (C₂-C₅)-Alkoxycarbonyl und (C₂-C₆)-Alkenyl substituiert ist; (C₃-C₈)-Cycloalkyl, das unsubstituiert oder durch einen oder mehrere Reste aus der Gruppe (C₁-C₄)-Alkyl, (C₁-C₄)-Alkoxy, (C₁-C₄)-Alkylthio und Halogen substituiert ist; (C₅-C₈)-Cycloalkenyl; Phenyl-(C₁-C₄)-alkyl, das im Phenylrest unsubstituiert oder substituiert ist; oder einen Rest der Formeln A-1 bis A-10, 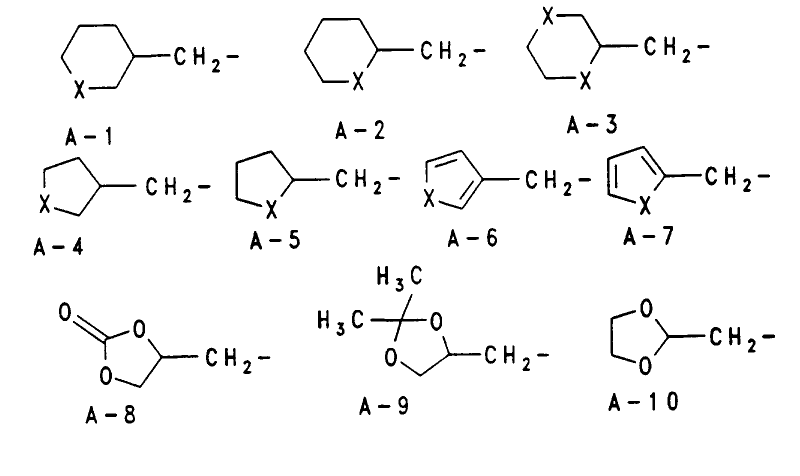 worin
   X O, S, S(O) oder SO₂, vorzugsweise O, bedeutet,
   - R²: Wasserstoff, Halogen, vorzugsweise Chlor, oder (C₁-C₃)-Alkyl oder (C₁-C₃)-Alkoxy, wobei die beiden letztgenannten Reste unsubstituiert oder ein- oder mehrfach durch Halogen oder (C₁-C₃)-Alkoxy substituiert sind;
   - R³: Wasserstoff, Halogen, vorzugsweise Chlor, oder (C₁-C₃)-Alkyl, (C₁-C₃)-Alkoxy oder (C₁-C₃)-Alkylthio, wobei die letztgenannten 3 Reste unsubstituiert oder ein- oder mehrfach durch Halogen oder ein- oder zweifach durch (C₁-C₃)-Alkoxy oder (C₁-C₃)-Alkylthio substituiert sind; oder einen Rest der Formel NR⁵R⁶, (C₃-C₆)-Cycloalkyl, (C₂-C₄)-Alkenyl, (C₁-C₄)-Alkinyl, (C₃-C₄)-Alkenyloxy oder (C₃-C₆)-Alkinyloxy;
   - R⁴: Wasserstoff oder (C₁-C₄)-Alkyl;
   - R⁵ und R⁶: unabhängig voneinander Wasserstoff, (C₁-C₄)-Alkyl, (C₃-C₄)-Alkenyl, (C₁-C₄)-Haloalkyl oder (C₁-C₄)-Alkoxy und
   - Hal: Fluor, Chlor, Brom oder Jod bedeuten,
   und
B) mindestens eine Verbindung aus der Gruppe der Verbindungen der Formeln (B1) und (B2), 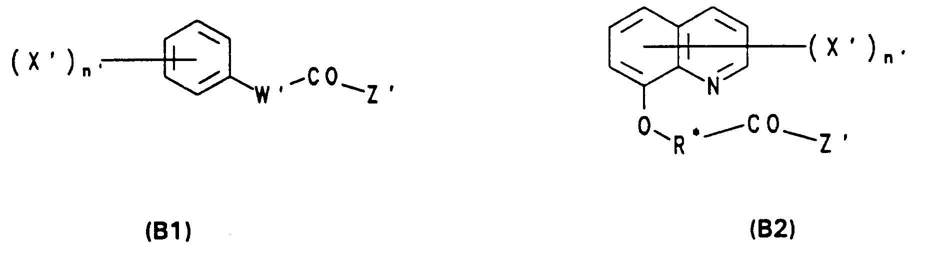 in welchen
   - X': Wasserstoff, Halogen, (C₁-C₄)-Alkyl, (C₁-C₄)-Alkoxy, Nitro oder (C₁-C₄)-Halogenalkyl bedeutet,
   - Z': OR⁷, SR⁷ oder NR⁷R⁸ bedeutet oder für einen gesättigten oder ungesättigten 3- bis 7-gliedrigen Heterocyclus mit mindestens einem N-Atom und bis zu 3 Heteroatomen steht, der über das N-Atom mit der Carbonylgruppe verbunden ist und unsubstituiert oder durch Reste aus der Gruppe (C₁-C₄)-Alkyl, (C₁-C₄)-Alkoxy oder gegebenenfalls substituiertes Phenyl substituiert ist, vorzugsweise einen Rest der Formel OR⁷, NHR⁸ oder N(CH₃)₂, insbesondere der Formel OR⁷,
   - R*: eine (C₁ oder C₂)-Alkandiylkette bedeutet, die noch mit ein oder zwei (C₁-C₄)-Alkylresten oder mit [(C₁-C₃)-Alkoxy]-carbonyl substituiert sein kann,
   - R⁷: Wasserstoff, (C₁-C₁₈)-Alkyl, (C₃-C₁₂)-Cycloalkyl, (C₂-C₈)-Alkenyl oder (C₂-C₈)-Alkinyl bedeutet,
   wobei die vorstehenden C-haltigen Reste unsubstituiert oder ein- oder mehrfach, vorzugsweise bis zu dreifach, durch gleiche oder verschiedene Reste aus der Gruppe enthaltend Halogen, Hydroxy, (C₁-C₈)-Alkoxy, (C₁-C₈)-Alkylmercapto, (C₂-C₈)-Alkenylmercapto, (C₂-C₈)-Alkinylmercapto, (C₂-C₈)-Alkenyloxy, (C₂-C₈)-Alkinyloxy, (C₃-C₇)-Cycloalkyl, (C₃-C₇)-Cycloalkoxy, Cyano, Mono- und Di-(C₁-C₄-alkyl)-amino, Carboxy, (C₁-C₈)-Alkoxycarbonyl, (C₂-C₈)-Alkenyloxycarbonyl, (C₁-C₈)-Alkylmercaptocarbonyl, (C₂-C₈)-Alkinyloxycarbonyl, (C₁-C₈)-Alkylcarbonyl, (C₂-C₈)-Alkenylcarbonyl, (C₂-C₈)-Alkinylcarbonyl, 1-(Hydroxyimino)-(C₁-C₆)-alkyl, 1-[(C₁-C₄)-Alkylimino]-(C₁-C₄)-alkyl, 1-[(C₁-C₄)-Alkoxyimino]-(C₁-C₆)-alkyl, (C₁-C₈)-Alkylcarbonylamino, (C₂-C₈)-Alkenylcarbonylamino, (C₂-C₈)-Alkinylcarbonylamino, Aminocarbonyl, (C₁-C₈)-Alkylaminocarbonyl, Di-(C₁-C₆)-alkylaminocarbonyl, (C₂-C₆)-Alkenylaminocarbonyl, (C₂-C₆)-Alkinylaminocarbonyl, (C₁-C₈)-Alkoxycarbonylamino, (C₁-C₈)-Alkylaminocarbonylamino, (C₁-C₆)-Alkylcarbonyloxy, das unsubstituiert oder durch Halogen, Nitro, (C₁-C₄)-Alkoxy oder gegebenenfalls substituiertes Phenyl substituiert ist, (C₂-C₆)-Alkenylcarbonyloxy, (C₂-C₆)-Alkinylcarbonyloxy, (C₁-C₈)-Alkylsulfonyl, Phenyl, Phenyl-(C₁-C₆)-alkoxy, Phenyl-(C₁-C₆)-alkoxycarbonyl, Phenoxy, Phenoxy-(C₁-C₆)-alkoxy, Phenoxy-(C₁-C₆)-alkoxycarbonyl, Phenylcarbonyloxy, Phenylcarbonylamino, Phenyl-(C₁-C₆)-alkylcarbonylamino, wobei die letztgenannten 9 Reste im Phenylring unsubstituiert oder ein- oder mehrfach, vorzugsweise bis zu dreifach durch gleiche oder verschiedene Reste aus der Gruppe Halogen, (C₁-C₄)-Alkyl, (C₁-C₄)-Alkoxy, (C₁-C₄)-Halogenalkyl, (C₁-C₄)-Halogenalkoxy und Nitro substituiert sind, und Reste der Formeln -SiR'₃, -O-SiR'₃, R'₃Si-(C₁-C₈)-alkoxy, -CO-O-NR'₂, -O-N =CR'₂, -N = CR'₂, -O-NR'₂, CH(OR')₂ und -O-(CH₂)ₘ-CH(OR')₂, worin die R' in den genannten Formeln unabhängig voneinander Wasserstoff, (C₁-C₄)-Alkyl, Phenyl, das unsubstituiert oder ein- oder mehrfach, vorzugsweise bis zu dreifach durch gleiche oder verschiedene Reste aus der Gruppe Halogen, (C₁-C₄)-Alkyl, (C₁-C₄)-Alkoxy, (C₁-C₄)-Halogenalkyl, (C₁-C₄)-Halogenalkoxy und Nitro substituiert ist, oder paarweise eine (C₂-C₆)-Alkandiylkette und m = 0 bis 6 bedeuten, und einen substituierten Alkoxyrest der Formel R''O-CHR'''(OR'')-(C₁-C₆)-alkoxy, worin die R'' unabhängig voneinander (C₁-C₄)-Alkyl oder zusammen (C₁-C₆)-Alkandiyl und R''' Wasserstoff oder (C₁-C₄)-Alkyl bedeuten, substituiert sind,
   - R⁸: Wasserstoff, (C₁-C₆)-Alkyl, (C₁-C₆)-Alkoxy oder gegebenenfalls substituiertes Phenyl bedeutet,
   - n': eine ganze Zahl von 1 bis 5, vorzugsweise 1 bis 3 ist,
   - W': ein divalenter heterocyclischer Rest einer der Formeln (W1) bis (W4) bedeutet, 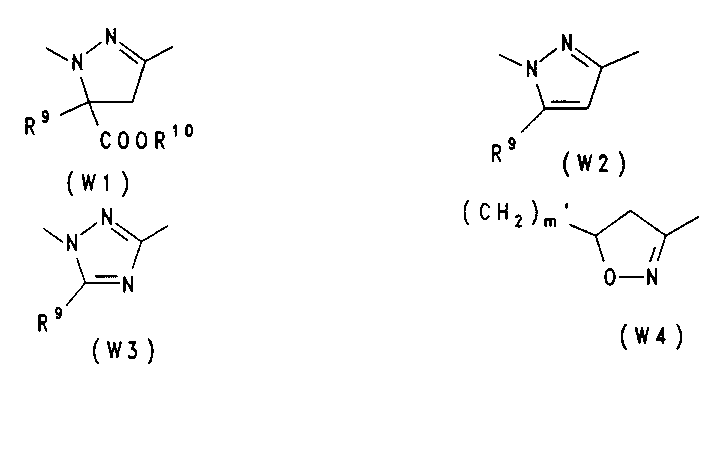
   - R⁹: Wasserstoff, (C₁-C₈)-Alkyl, (C₁-C₈)-Halogenalkyl, (C₃-C₁₂)-Cycloalkyl oder gegebenenfalls substituiertes Phenyl bedeutet,
   - R¹⁰: Wasserstoff, (C₁-C₈)-Alkyl, (C₁-C₈)-Halogenalkyl, (C₁-C₄)-Alkoxy-(C₁-C₄)-alkyl, (C₁-C₆)-Hydroxyalkyl, (C₃-C₁₂)-Cycloalkyl oder Tri-(C₁-C₄)-alkyl-silyl bedeutet und
   - m': 0 oder 1 bedeutet.

Sofern es im einzelnen nicht anders definiert wird, gelten für die Reste in den Formeln (A), (B1) und (B2) die folgenden Definitionen: Alkyl, Alkenyl und Alkinyl sind geradkettig oder verzweigt und haben bis zu 8, vorzugsweise bis zu 4 C-Atome; entsprechendes gilt für den aliphatischen Teil substituierter Alkyl-, Alkenyl- und Alkinylreste oder davon abgeleitete Reste wie Halogenalkyl, Hydroxyalkyl, Alkoxycarbonyl, Alkoxy, Alkanoyl, Halogenalkoxy usw.

Alkyl steht z. B. für Methyl, Methyl, n- und Isopropyl, n-, iso-, tert.- und 2-Butyl, Pentyle, Hexyle, wie n-Hexyl, Isohexyl und 1,3-Dimethylbutyl, Heptyle, wie n-Heptyl, 1-Methylhexyl und 1,4-Dimethylpentyl. Alkenyl bedeutet z. B. Allyl, 1-Methylprop-2-en-1-yl, But-2-en-1-yl, But-3-en-1-yl, 1-Methyl-but-3-en-1-yl und 1-Methyl-but-2-en-1-yl. Alkinyl bedeutet z. B. Propargyl, But-2-in-1-yl, But-3-in-1-yl, 1-Methyl-but-3-inyl.

Cycloalkyl hat vorzugsweise 3 bis 8 C-Atome und steht z.B. für Cyclobutyl, Cyclopentyl, Cyclohexyl oder Cycloheptyl. Cycloalkyl kann gegebenenfalls bis zu zwei (C₁-C₄)-Alkylreste als Substituenten tragen.

Halogen bedeutet Fluor, Chlor, Brom oder Iod, vorzugsweise Fluor, Chlor oder Brom, insbesondere Fluor oder Chlor. Halogenalkyl, -alkenyl und -alkinyl bedeuten durch Halogen mono-, di- oder polysubstituiertes Alkyl, Alkenyl bzw. Alkinyl, wie CF₃, CHF₂, CH₂F, CF₃CF₂, CH₂FCHCl, CCl₃, CHCl₂ oder CH₂CH₂Cl. Halogenalkoxy ist z. B. OCF₃, OCHF₂, OCH₂F, CF₃CF₂O, CF₃CH₂O.

Aryl weist vorzugsweise 6 bis 12 C-Atome auf und ist z.B. Phenyl, Naphthyl oder Biphenylyl, vorzugsweise aber Phenyl. Entsprechendes gilt für davon abgeleitete Reste, wie Aryloxy, Aroyl oder Aryloxyalkyl. Gegebenenfalls substituiertes Phenyl ist z.B. Phenyl, das unsubstituiert ist oder ein, zwei oder drei gleiche oder verschiedene Substituenten aus der Gruppe Halogen, (C₁-C₄)-Alkyl, (C₁-C₄)-Alkoxy, (C₁-C₄)-Haloalkyl, (C₁-C₄)-Haloalkoxy, (C₁-C₄)-Alkylthio, (C₂-C₅)-Alkoxycarbonyl, (C₂-C₅)-Alkylcarbonyloxy, Carbonamid, (C₂-C₅)-Alkylcarbonylamino, (C₂-C₅)-Alkylaminocarbonyl, Di[(C₁-C₄)-Alkyl]-aminocarbonyl und Nitro trägt, wie z.B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl oder o-, m- und p-Methoxyphenyl. Entsprechendes gilt für gegebenenfalls substituiertes Aryl.

Die Verbindungen der Formel (A) können Salze bilden, bei denen der Wasserstoff der -SO₂-NH-Gruppe durch ein für die Landwirtschaft geeignetes Kation ersetzt wird. Diese Salze sind beispielsweise Metall-, insbesondere Alkalisalze (z.B. Na- oder K-Salze) oder Erdalkalisalze, oder auch Ammoniumsalze oder Salze mit organischen Aminen. Ebenso kann Salzbildung durch Anlagerung einer starken Säure an den Heterocyclenteil der Verbindungen der Formel (A) erfolgen. Geeignete Säuren hierfür sind z. B. HCl, HNO₃, Trichloressigsäure, Essigsäure oder Palmitinsäure.

Im folgenden sind mit Herbizid (A) die Verbindungen der Formel (A) und deren Salze gemeint.

Manche Verbindungen der Formel (A), (B1) oder (B2) können ein oder mehrere asymmetrische C-Atome oder auch Doppelbindungen enthalten, die in den allgemeinen Formeln nicht gesondert angegeben sind. Die durch ihre spezifische Raumform definierten möglichen Stereoisomeren, wie Enantiomere, Diastereomere, Z- und E-Isomere sind jedoch alle von den Formeln umfaßt und können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden. Die genannten Stereoisomeren in reiner Form als auch ihre Gemische können somit erfindungsgemäß eingesetzt werden.

Von besonderem Interesse sind erfindungsgemäße Herbizid-Safener-Kombinationen mit Verbindungen der Formel (A) oder deren Salzen, worin
- R¹: Wasserstoff; (C₁-C₆)-Alkyl; (C₂-C₆)-Alkenyl; (C₂-C₆)-Alkinyl; (C₁-C₄)-Alkyl, das ein- bis vierfach, vorzugsweise einfach, durch Reste aus der Gruppe Halogen, (C₁-C₂)-Alkoxy, (C₁-C₂)-Alkylthio, (C₂-C₃)-Alkoxycarbonyl und (C₂-C₄)-Alkenyl substituiert ist; (C₅-C₆)-Cycloalkyl, das unsubstituiert oder durch einen oder mehrere Reste aus der Gruppe (C₁-C₄)-Alkyl, (C₁-C₄)-Alkoxy, (C₁-C₄)-Alkylthio und Halogen substituiert ist; (C₅-C₆)-Cycloalkenyl; Benzyl, das im Phenylrest unsubstituiert oder durch einen bis drei Reste aus der Gruppe Halogen, (C₁-C₂)-Alkyl, (C₁-C₂)-Alkoxy, (C₁-C₂)-Haloalkyl, (C₁-C₂)-Alkylthio und (C₂-C₄)-Alkoxycarbonyl substituiert ist, oder einen Rest der genannten Formeln A-1 bis A-10 und
- Hal: Chlor, Brom oder Jod bedeuten.

Weiter von besonderem Interesse sind erfindungsgemäße Herbizid-Safener-Kombinationen mit Verbindungen der Formel (A) oder deren Salzen, worin
- R²: Wasserstoff, Halogen, vorzugsweise Chlor, (C₁-C₂)-Alkyl, (C₁-C₂)-Alkoxy, wobei die beiden letztgenannten Reste unsubstituiert oder ein- oder mehrfach durch Halogen oder (C₁-C₃)-Alkoxy substituiert sind;
- R³: Wasserstoff, Halogen, vorzugsweise Chlor, (C₁-C₂)-Alkyl, (C₁-C₂)-Alkoxy, oder (C₁-C₂)-Alkylthio, wobei die vorgenannten alkylhaltigen Reste unsubstituiert oder ein- oder mehrfach durch Halogen oder ein- oder zweifach durch (C₁-C₂)-Alkoxy oder (C₁-C₂)-Alkylthio substituiert sind; oder einen Rest der Formel NR⁵R⁶;
- R⁴: Wasserstoff oder Methyl,
- R⁵ und R⁶: unabhängig voneinander Wasserstoff oder (C₁-C₂)-Alkyl und
- Hal: Chlor oder Jod bedeuten.

Bevorzugt sind erfindungsgemäße Herbizid-Safener-Kombinationen mit Verbindungen der Formel (A) oder deren Salzen, bei denen
- W: ein Sauerstoffatom,
- Y: CH oder N,
- Z: N,
- R²: Wasserstoff, CH₃, CH₂CH₃, OCH₃, OCH₂CH₃, OCHF₂ oder Cl,
- R³: Wasserstoff, CH₃, CH₂CH₃, OCH₃, OCH₂CH₃, OCHF₂, NH(CH₃), N(CH₃)₂, CF₃, OCH₂CF₃ oder Cl,
- R⁴: H oder CH₃ und
- Hal: Jod sind.

Von besonderem Interesse sind auch herbizide Mittel,
in welchen in Formel (B1) oder (B2)
- R⁷: Wasserstoff, (C₁-C₈)-Alkyl oder (C₃-C₇)-Cycloalkyl bedeutet, wobei die vorstehenden C-haltigen Reste unsubstituiert sind oder ein- oder mehrfach durch Halogen oder ein- oder zweifach, vorzugsweise bis zu einfach substituiert sind durch Reste aus der Gruppe Hydroxy, (C₁-C₄)-Alkoxy, Carboxy, (C₁-C₄)-Alkoxycarbonyl, (C₂-C₆)-Alkenyloxycarbonyl, (C₂-C₆)-Alkinyloxycarbonyl, 1-(Hydroxyimino)-(C₁-C₄)-alkyl, 1-[(C₁-C₄)-Alkylimino]-(C₁-C₄)-alkyl, 1-[(C₁-C₄)-Alkoxyimino]-(C₁-C₄)-alkyl und Reste der Formeln -SiR'₃, -O-N = CR'₂, -N = CR'₂ und -O-NR'₂, worin die R' in den genannten Formeln unabhängig voneinander Wasserstoff oder (C₁-C₄)-Alkyl oder paarweise eine (C₄-C₅)-Alkandiylkette bedeuten,
- R⁹: Wasserstoff, (C₁-C₈)-Alkyl, (C₁-C₆)-Halogenalkyl, (C₃-C₇)-Cycloalkyl oder Phenyl bedeutet und
- R¹⁰: Wasserstoff, (C₁-C₈)-Alkyl, (C₁-C₈)-Halogenalkyl, (C₁-C₄-Alkoxy)-(C₁-C₄)-alkyl, (C₁-C₆)-Hydroxyalkyl, (C₃-C₇)-Cycloalkyl oder Tri-(C₁-C₄)-alkylsilyl bedeutet,
sowie herbizide Mittel,
in welchen in Formel (B1) oder (B2)
- X': Wasserstoff, Halogen, Methyl, Ethyl, Methoxy, Ethoxy, (C₁ oder C₂)-Halogenalkyl, vorzugsweise Wasserstoff, Halogen oder (C₁ oder C₂)-Halogenalkyl bedeutet.

Bevorzugt sind herbizide Mittel,
in welchen in Formel (B1)
- X': Wasserstoff, Halogen, Nitro oder (C₁-C₄)-Halogenalkyl bedeutet,
- n': 1, 2 oder 3 ist,
- Z': einen Rest der Formel OR⁷ bedeutet,
- R⁷: Wasserstoff, (C₁-C₈)-Alkyl oder (C₃-C₇)-Cycloalkyl bedeutet, wobei die vorstehenden C-haltigen Reste unsubstituiert sind oder ein- oder mehrfach, vorzugsweise bis zu dreifach durch gleiche oder verschiedene Halogen-Reste oder bis zu zweifach, vorzugsweise bis zu einfach, durch gleiche oder verschiedene Reste aus der Gruppe Hydroxy, (C₁-C₄)-Alkoxy, (C₁-C₄)-Alkoxycarbonyl, (C₂-C₆)-Alkenyloxycarbonyl, (C₂-C₆)-Alkinyloxycarbonyl, 1-(Hydroxyimino)-(C₁-C₄)-alkyl, 1-[(C₁-C₄)-Alkylimino]-(C₁-C₄)-alkyl, 1-[(C₁-C₄)-Alkoxyimino]-(C₁-C₄)-alkyl und Reste der Formeln -SiR'₃, -O-N = R'₂, -N = CR'₂ und -O-NR'₂ substituiert sind, wobei die Reste R' in den genannten Formeln unabhängig voneinander Wasserstoff oder (C₁-C₄)-Alkyl bedeuten oder diese paarweise für (C₄ oder C₅)-Alkandiyl stehen,
- R⁹: Wasserstoff, (C₁-C₈)-Alkyl, (C₁-C₆)-Halogenalkyl, (C₃-C₇)-Cycloalkyl oder Phenyl bedeutet und
- R¹⁰: Wasserstoff, (C₁-C₈)-Alkyl, (C₁-C₈)-Halogenalkyl, (C₁-C₄)-Alkoxy-(C₁-C₄)-alkyl, (C₁-C₆)-Hydroxyalkyl, (C₃-C₇)-Cycloalkyl oder Tri-(C₁-C₄)-alkylsilyl bedeutet.

Bevorzugt sind auch herbizide Mittel,
in welchen in Formel (B2)
- X': Wasserstoff, Halogen oder (C₁-C₄)-Halogenalkyl bedeutet,
- n': 1, 2 oder 3 ist, wobei (X')_{n'} , vorzugsweise 5-Cl ist,
- Z': einen Rest der Formel OR⁷ bedeutet,
- R*: CH₂ bedeutet und
- R⁷: Wasserstoff, (C₁-C₈)-Alkyl, (C₁-C₈)-Halogenalkyl oder (C₁-C₄)-Alkoxy-(C₁-C₄)-alkyl, vorzugsweise (C₁-C₈)-Alkyl bedeutet.

Besonders bevorzugt sind herbizide Mittel,
in welchen in Formel (B1)
- W': (W1) bedeutet,
- X': Wasserstoff, Halogen oder (C₁-C₂)-Halogenalkyl bedeutet,
- n': 1, 2 oder 3 ist, wobei (X')_{n'} , vorzugsweise 2,4-Cl₂ ist,
- Z': einen Rest der Formel OR⁷ bedeutet,
- R⁷: Wasserstoff, (C₁-C₈)-Alkyl, (C₁-C₄)-Halogenalkyl, (C₁-C₄)-Hydroxyalkyl, (C₃-C₇)-Cycloalkyl, (C₁-C₄)-Alkoxy-(C₁-C₄)-alkyl, Tri-(C₁-C₂)-alkylsilyl, vorzugsweise (C₁-C₄)-Alkyl bedeutet,
- R⁹: Wasserstoff, (C₁-C₈)-Alkyl, (C₁-C₄)-Halogenalkyl oder (C₃-C₇)-Cycloalkyl, vorzugsweise Wasserstoff oder (C₁-C₄)-Alkyl bedeutet und
- R¹⁰: Wasserstoff, (C₁-C₈)-Alkyl, (C₁-C₄)-Halogenalkyl, (C₁-C₄)-Hydroxyalkyl, (C₃-C₇)-Cycloalkyl, (C₁-C₄)-Alkoxy-(C₁-C₄)-alkyl oder Tri-(C₁-C₂)-alkylsilyl, vorzugsweise Wasserstoff oder (C₁-C₄)-Alkyl bedeutet.

Besonders bevorzugt sind auch herbizide Mittel,
in welchen in Formel (B1)
- W': (W2) bedeutet,
- X': Wasserstoff, Halogen oder (C₁-C₂)-Halogenalkyl bedeutet,
- n': 1, 2 oder 3 ist, wobei (X')_{n'} , vorzugsweise 2,4-Cl₂ ist,
- Z': einen Rest der Formel OR⁷ bedeutet,
- R⁷: Wasserstoff, (C₁-C₈)-Alkyl, (C₁-C₄)-Halogenalkyl, (C₁-C₄)-Hydroxyalkyl, (C₃-C₇)-Cycloalkyl, (C₁-C₄-Alkoxy)-C₁-C₄-alkyl, Tri-(C₁-C₂)-alkyl-silyl, vorzugsweise (C₁-C₄)-Alkyl bedeutet und
- R⁹: Wasserstoff, (C₁-C₈)-Alkyl, (C₁-C₄)-Halogenalkyl, (C₃-C₇)-Cycloalkyl oder Phenyl, vorzugsweise Wasserstoff oder (C₁-C₄)-Alkyl bedeutet.

Besonders bevorzugt sind auch herbizide Mittel,
in welchen in Formel (B1)
- W': (W3) bedeutet,
- X': Wasserstoff, Halogen oder (C₁-C₂)-Halogenalkyl bedeutet,
- n': 1, 2 oder 3 ist, wobei (X')_{n'} , vorzugsweise 2,4-Cl₂ ist,
- Z': einen Rest der Formel OR⁷ bedeutet,
- R⁷: Wasserstoff, (C₁-C₈)-Alkyl, (C₁-C₄)-Halogenalkyl, (C₁-C₄)-Hydroxyalkyl, (C₃-C₇)-Cycloalkyl, (C₁-C₄)-Alkoxy-(C₁-C₄)-alkyl, Tri-(C₁-C₂)-alkylsilyl, vorzugsweise (C₁-C₄)-Alkyl bedeutet und
- R⁹: (C₁-C₈)-Alkyl oder (C₁-C₄)-Halogenalkyl, vorzugsweise C₁-Halogenalkyl bedeutet.

Besonders bevorzugt sind auch herbizide Mittel,
in welchen in Formel (B1)
- W': (W4) bedeutet,
- X': Wasserstoff, Halogen, Nitro, (C₁-C₄)-Alkyl oder (C₁-C₂)-Halogenalkyl, vorzugsweise CF₃, oder (C₁-C₄)-Alkoxy bedeutet,
- n': 1, 2 oder 3 ist,
- m': 0 oder 1 ist,
- Z': einen Rest der Formel OR⁷ bedeutet und
- R⁷: Wasserstoff, (C₁-C₄)-Alkyl, Carboxy-(C₁-C₄)-alkyl oder (C₁-C₄)-Alkoxycarbonyl-(C₁-C₄)-alkyl, vorzugsweise (C₁-C₄)-Alkoxy-CO-CH₂-, (C₁-C₄)-Alkoxy-CO-C(CH₃)H-, HO-CO-CH₂- oder HO-CO-C(CH₃)H- bedeutet.

Die Verbindungen der Formeln (B1) sind aus EP-A-333 131 (ZA-89/1960), EP-A-269 806 (US-A-4,891,057), EP-A-346 620 (AU-A-89/34951) und den internationalen Patentanmeldungen PCT/EP 90/01966 (WO-91/08202) und PCT/EP 90/02020 (WO-91/07874) und dort zitierter Literatur bekannt oder können nach oder analog den dort beschriebenen Verfahren hergestellt werden. Die Verbindungen der Formel (B2) sind aus EP-A-94 349 (US-A-4,902,340), EP-A-191 736 (US-A-4,881,966) und EP-A-0 492 366 und dort zitierter Literatur bekannt oder können nach oder analog den dort beschriebenen Verfahren hergestellt werden. Einige Verbindungen sind ferner in der deutschen Patentanmeldung P 42 25 493.0 beschrieben.

Als herbizide Wirkstoffe eignen sich erfindungsgemäß solche Pyrimidin- bzw. Triazinderivate der Formel (A), die allein nicht oder nicht optimal in Getreidekulturen und/oder Mais eingesetzt werden können, weil sie die Kulturpflanzen zu stark schädigen.

Die Verbindungen der Formel (A) sind z.B. aus EP-A-007 687, EP-A-0291851, DE-A-7900472, US-A-4,566,898 und WO 92/13845 bekannt oder können analog den dort erwähnten Verfahren hergestellt werden.

Folgende Gruppen von Verbindungen haben sich als Safener für die oben erwähnten herbiziden Wirkstoffe bewährt:
a) Verbindungen vom Typ der Dichlorphenylpyrazolin-3-carbonsäure (d.h. der Formel (B1), worin W' = W1 und (X')_{n'} = 2,4-Cl₂), vorzugsweise Verbindungen wie 1-(2,4-Dichlorphenyl)-5-(ethoxycarbonyl)-5-methyl-2-pyrazolin-3-carbonsäureethylester (B1-1), und verwandte Verbindungen, wie sie in der WO 91/07874 beschrieben sind,
b) Derivate der Dichlorphenylpyrazolcarbonsäure (d.h. der Formel (B1), worin W' = W2 und (X')_{n'} = 2,4-Cl₂), vorzugsweise Verbindungen wie 1-(2,4-Dichlorphenyl)-5-methyl-pyrazol-3-carbonsäureethylester (B1-2), 1-(2,4-Dichlorphenyl)-5-isopropyl-pyrazol-3-carbonsäureethylester (B1-3), 1-(2,4-Dichlorphenyl)-5-(1,1-dimethyl-ethyl)pyrazol-3-carbonsäureethylester (B1-4), 1-(2,4-Dichlorphenyl)-5-phenyl-pyrazol-3-carbonsäureethylester (B1-5) und verwandte Verbindungen, wie sie in EP-A-333 131 und EP-A-269 806 beschrieben sind.
c) Verbindungen vom Typ der Triazolcarbonsäuren (d. h. der Formel (B1), worin W' = W3 und (X')_{n'} = 2,4-Cl₂), vorzugsweise Verbindungen wie Fenchlorazol, d.h. 1-(2,4-Dichlorphenyl)-5-trichlormethyl-(1H)-1,2,4-triazol-3-carbonsäureethylester (B1-6), und verwandte Verbindungen (siehe EP-A-174 562 und EP-A-346 620);
d) Verbindungen vom Typ der 5-Benzyl- oder 5-Phenyl-2-isoxazolin-3-carbonsäure, vorzugsweise Verbindungen wie 5-(2,4-Dichlorbenzyl)-2-isoxazolin-3-carbonsäureethylester (B1-7) oder 5-Phenyl-2-isoxazolin-3-carbonsäureethylester (B1-8) und verwandte Verbindungen, wie sie in WO 91/08202 beschrieben sind.
e) Verbindungen vom Typ der 8-Chinolinoxyessigsäure, z.B. solche der Formel (B2), worin (X')_{n'} = 5-Cl, Wasserstoff, Z' = OR⁷, R* = CH₂), vorzugsweise Verbindungen wie
   (5-Chlor-8-chinolinoxy)-essigsäure-(1-methyl-hex-1-yl)-ester (B2-1),
   (5-Chlor-8-chinolinoxy)-essigsäure-(1,3-dimethyl-but-1-yl)-ester (B2-2),
   (5-Chlor-8-chinolinoxy)-essigsäure-4-allyl-oxy-butylester (B2-3),
   (5-Chlor-8-chinolinoxy)-essigsäure-1-allyloxy-prop-2-ylester (B2-4),
   (5-Chlor-8-chinolinoxy)-essigsäureethylester (B2-5),
   (5-Chlor-8-chinolinoxy)-essigsäuremethylester (B2-6),
   (5-Chlor-8-chinolinoxy)-essigsäureallylester (B2-7),
   (5-Chlor-8-chinolinoxy)-essigsäure-2-(2-propyliden-iminoxy)-1-ethylester (B2-8),
   (5-Chlor-8-chinolinoxy)-essigsäure-2-oxo-prop-1-ylester (B2-9)
   und verwandte Verbindungen, wie sie in EP-A-86 750, EP-A-94 349 und EP-A-191 736 oder EP-A-0 492 366 beschrieben sind.
f) Verbindungen vom Typ der (5-Chlor-8-chinolinoxy)-malonsäure (d. h. der Formel (B2) worin (X')_{n'} = 5-Cl, Z' = OR⁷, R* = -CH(COO-Alkyl)-, vorzugsweise Verbindungen wie (5-Chlor-8-chinolinoxy)-malonsäurediethylester, (5-Chlor-8-chinolinoxy)-malonsäurediallylester, (5-Chlor-8-chinolinoxy)-malonsäure-methyl-ethylester und verwandte Verbindungen, wie sie in der deutschen Patentanmeldung P 42 25 493.0 beschrieben sind.
g) Wirkstoffe vom Typ der Phenoxyessig- bzw. -propionsäurederivate bzw. der aromatischen Carbonsäuren, wie z. B. 2,4-Dichlorphenoxyessigsäure(ester) (2,4-D), 4-Chlor-2-methyl-phenoxypropionester (Mecoprop), MCPA oder 3,6-Dichlor-2-methoxybenzoesäure(ester) (Dicamba).

Die Safener (Antidote) der Formeln (B1) und (B2) und beispielsweise der vorstehenden Gruppen a) bis g) reduzieren oder unterbinden phytotoxische Effekte, die beim Einsatz der herbiziden Wirkstoffe der Formel (A) in Nutzpflanzenkulturen auftreten können, ohne die Wirksamkeit dieser herbiziden Wirkstoffe gegen Schadpflanzen zu beeinträchtigen. Hierdurch kann das Einsatzgebiet herkömmlicher Pflanzenschutzmittel ganz erheblich erweitert und z. B. auf Kulturen wie Weizen, Gerste, Mais und andere Gramineen-Kulturen ausgedehnt werden, in denen bisher ein Einsatz der Herbizide nicht möglich oder nur beschränkt, das heißt, in niedrigen Dosierungen mit wenig Breitenwirkung möglich war.

Die herbiziden Wirkstoffe und die erwähnten Safener können zusammen (als fertige Formulierung oder im Tank-mix-Verfahren) oder in beliebiger Reihenfolge nacheinander ausgebracht werden. Das Gewichtsverhältnis Safener: herbizider Wirkstoff kann innerhalb weiter Grenzen variieren und ist vorzugsweise im Bereich von 1:100 bis 100:1, insbesonderevon 1:10 bis 10:1. Die jeweils optimalen Mengen an herbizidem Wirkstoff und Safener sind vom Typ des verwendeten herbiziden Wirkstoffs oder vom verwendeten Safener sowie von der Art des zu behandelnden Pflanzenbestandes abhängig und lassen sich von Fall zu Fall durch entsprechende Vorversuche ermitteln.

Haupteinsatzgebiete für die Anwendung der Safener sind vor allem Mais und Getreidekulturen (Weizen, Roggen, Gerste, Hafer), Reis Sorghum, aber auch Baumwolle und Sojabohne, vorzugsweise Getreide und Mais.

Die Safener der Formeln (B1) und (B2) können je nach ihren Eigenschaften zur Vorbehandlung Saatgutes der Kulturpflanze (Beizung der Samen) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.

Die benötigten Aufwandmengen der Safener können je nach Indikation und verwendetem herbiziden Wirkstoff innerhalb weiter Grenzen schwanken und sind in der Regel im Bereich von 0,001 bis 5 kg, vorzugsweise 0,005 bis 0,5 kg Wirkstoff je Hektar.

Gegenstand der vorliegenden Erfindung ist deshalb auch ein Verfahren zum Schutz von Kulturpflanzen vor phytotoxischen Nebenwirkungen von Herbiziden der Formel (A), das dadurch gekennzeichnet ist, daß eine wirksame Menge einer Verbindung der Formel (B1) und/oder (B2) vor, nach oder gleichzeitig mit dem herbiziden Wirkstoff der Formel (A) auf die Pflanzen, Pflanzensamen oder die Anbaufläche appliziert wird.

Die Verbindungen der Formeln (B1) und (B2) und deren Kombinationen mit einem oder mehreren der genannten herbiziden Wirkstoffe können auf verschiedene Art formuliert werden, je nachdem welche biologischen und/oder chemisch-physikalischen Parameter vorgegeben sind. Als Formulierungsmöglichkeiten kommen beispielsweise in Frage: Spritzpulver (WP), emulgierbare Konzentrate (EC), wasserlösliche Pulver (SP), wasserlösliche Konzentrate (SL), konzentrierte Emulsionen (BW) wie Öl-in-Wasser und Wasser-in-Öl-Emulsionen, versprühbare Lösungen oder Emulsionen, Kapselsuspensionen (CS), Dispersionen auf Öl- oder Wasserbasis (SC), Suspoemulsionen, Suspensionskonzentrate, Stäubemittel (DP), ölmischbare Lösungen (OL), Beizmittel, Granulate (GR) in Form von Mikro-, Sprüh-, Aufzugs- und Adsorptionsgranulaten, Granulate für die Boden- bzw. Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und werden beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N.Y., 1973; K. Martens, "Spray Drying Handbook", 3rd Ed. 1979, G. Goodwin Ltd. London.

Die notwendigen Formulierungshilfsmittel wie Inertmaterialien, Tenside, Lösungsmittel und weitere Zusatzstoffe sind ebenfalls bekannt und werden beispielsweise beschrieben in: Watkins, "Handbook of Insecticide Dust Diluents and Carriers", 2nd Ed., Darland Books, Caldwell N.J.; H.v.Olphen "Intruduction to Clay Colloid Chemistry", 2nd Ed, J. Wiley & Sons, N.Y., Marsden "Solvents Guide, 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. Inc., N.Y. 1964; Schönfeldt, "Grenzflächenaktive Äthylenoxidadduckte", Wiss. Verlagsgesell., Stuttgart 1976; Winnacker-Küchler "Chemische Technolgie", B and 7, C. Hauser Verlag München, 4. Aufl. 1986.

Auf der Basis dieser Formulierungen lassen sich auch Kombinationen mit anderen pestizid wirksamen Stoffen, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben den Wirkstoffen außer einem Verdünnungs- oder Inertstoff noch Tenside ionischer und/oder nichtionischer Art (Netzmittel, Dispergiermittel), z.B. polyoxethylierte Alkylphenole, polyoxethylierte Fettalkohole und Fettamine, Fettalkoholpolyglykolethersulfate, Alkansulfonate oder Alkylarylsulfonate, ligninsulfonsaures Natrium 2,2'-dinaphthylmethan-6,6'-disulfonsaures Natrium, dibutylnaphthalinsulfonsaures Natrium oder auch oleylmethyltaurinsaures Natrium enthalten.

Emulgierbare Konzentrate werden durch Auflösen des Wirkstoffes oder der Wirkstoffe in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calcium-Salze wie Ca-Dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte (z.B. Blockpolymere), Alkylpolyether, Sorbitanfettsäureester, Polyoxyethylensorbitanfettsäureester oder andere Polyoxethylensorbitanester.

Stäubemittel erhält man durch Vermahlen des Wirkstoffes oder der Wirkstoffe mit fein verteilten festen Stoffen, z. B. Talkum, natürlichen Tonen, wie Kaolin, Bentonit und Pyrophyllit, oder Diatomeenerde.

Granulate können entweder durch Verdüsen des Wirkstoffes oder der Wirkstoffe auf adsorptionsfähiges, granuliertes Inertmaterial hergestellt werden oder durch Aufbringen von Wirkstoffkonzentraten mittels Klebemitteln, z. B. Polyvinylalkohol, polyacrylsaurem Natrium oder auch Mineralölen, auf die Oberfläche von Trägerstoffen wie Sand, Kaolinite oder von granuliertem Inertmaterial. Wasserdispergierbare Granulate werden in der Regel nach den üblichen Verfahren wie Sprühtrocknung, Wirbelbettgranulierung, Tellergranulierung, Mischung mit Hochgeschwindigkeitsmischern und Extrusion ohne festes Inertmaterial hergestellt. Auch können geeignete Wirkstoffe in der für die Herstellung von Düngemittelgranulaten üblichen Weise - gewünschtenfalls in Mischung mit Düngemitteln - granuliert werden.

Die agrochemischen Zubereitungen enthalten in der Regel 0,1 bis 99 Gew.-%, insbesondere 0,1 bis 95 Gew.-%, Wirkstoffe der Formel (B1) und/oder (B2) oder des Herbizid/Antidot-Wirkstoffgemischs (A) und (B1) und/oder (B2) und 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-% eines Tensides.

In Spritzpulvern beträgt die Wirkstoffkonzentration z.B. etwa 10 bis 90 Gew.%, der Rest zu 100 Gew.-% besteht aus üblichen Formulierungsbestandteilen. Bei emulgierbaren Konzentraten beträgt die Wirkstoffkonzentration etwa 1 bis 80 Gew.-%. Staubförmige Formulierungen enthalten etwa 1 bis 20 Gew.-% an Wirkstoffen, versprühbare Lösungen etwa 0,2 bis 20 Gew.-% Wirkstoffe. Bei Granulaten wie wasserdispergierbaren Granulaten hängt der Wirkstoffgehalt zum Teil davon ab, ob die wirksame Verbindung flüssig oder fest vorliegt. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Lösungsmittel, Füll- oder Trägerstoffe.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Granulate sowie versprühbare Lösungen werden vor der Anwendung üblicherweise nicht mehr mit weiteren inerten Stoffen verdünnt. Besonders gute Wirksamkeiten der erfindungsgemäßen Mittel können erzielt werden, wenn zusätzlich zu den in den Formulierungen enthaltenen Tensiden weitere Netzmittel in Konzentrationen von 0,1 bis 0,5 Gew.-% im Tank-mix-Verfahren zugesetzt werden, z.B. nichtionische Netzmittel oder Netzmittel vom Typ der Fettalkoholpolyolethersulfate (siehe z. B. deutsche Patentanmeldung P P 40 29 304.1). Mit den äußeren Bedingungen wie Temperatur, Feuchtigkeit, der Art des verwendeten Herbizids u.a. variiert die erforderliche Aufwandmenge der Safener.

Auf der Basis dieser Formulierungen lassen sich auch Kombinationen mit anderen im Pflanzenbau wirksamen Stoffe, z. B. Pestizide, wie Insektizide, Akarizide, Fungizide und Herbizide und/oder Düngemittel und/oder Wachstumsregulatoren herstellen, z. B. in Form einer Fertigformulierung oder als Tankmix.

Als Kombinationspartner für die erfindungsgemäßen Wirkstoffe in Mischungsformulierungen oder im Tank-Mix sind beispielsweise bekannte Wirkstoffe einsetzbar, wie sie in z.B. in Weed Research 26, 441-445 (1986), oder "The Pesticide Manual", 9th edition, The British Crop Protection Council, 1990/91, Bracknell, England und dort zitierter Literatur beschrieben sind. Als literaturbekannte Herbizide, die mit den Verbindungen der Formel (I) kombiniert werden können, sind z. B. folgende Wirkstoffe zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet):
acetochlor; acifluorfen; aclonifen; AKH 7088, d. h. [[[1-[5-[2-Chloro-4-(trifluoromethyl)-phenoxy]-2-nitrophenyl]-2-methoxyethylidene]-amino]-oxy]-essigsäure und -essigsäuremethylester; alachlor; alloxydim; ametryn; amidosulfuron; amitrol; AMS, d. h. Ammoniumsulfamat; anilofos; asulam; atrazin; aziprotryn; barban; BAS 516 H, d. h. 5-Fluor-2-phenyl-4H-3,1-benzoxazin-4-on; benazolin; benfluralin; benfuresate; bensulfuron-methyl; bensulide; bentazone; benzofenap; benzofluor; benzoylprop-ethyl; benzthiazuron; bialaphos; bifenox; bromacil; bromobutide; bromofenoxim; bromoxynil; bromuron; buminafos; busoxinone; butachlor; butamifos; butenachlor; buthidazole; butralin; butylate; carbetamide; CDAA, d. h. 2-Chlor-N,N-di-2-propenylacetamid; CDEC, d. h. Diethyldithiocarbaminsäure-2-chlorallylester; CGA 184927, d. h. 2-[4-[(5-Chlor-3-fluor-2-pyridinyl)-oxy]-phenoxy]-propansäure und 2-propynylester; chlomethoxyfen; chloramben; chlorazifop-butyl, pirifenop-butyl; chlorbromuron; chlorbufam; chlorfenac; chlorflurecol-methyl; chloridazon; chlorimuron ethyl; chlornitrofen; chlorotoluron; chloroxuron; chlorpropham; chlorsulfuron; chlorthal-dimethyl; chlorthiamid; cinmethylin; cinosulfuron; clethodim; clomazone; clomeprop; cloproxydim; clopyralid; cyanazine; cycloate; cycloxydim; cycluron; cyperquat; cyprazine; cyprazole; 2,4-DB; dalapon; desmedipham; desmetryn; di-allate; dicamba; dichlobenil; dichlorprop; diclofop-methyl; diethatyl; difenoxuron; difenzoquat; diflufenican; dimefuron; dimethachlor; dimethametryn; dimethazone, clomazon; dimethipin; dimetrasulfuron, cinosulfuron; dinitramine; dinoseb; dinoterb; diphenamid; dipropetryn; diquat; dithiopyr; diuron; DNOC; eglinazine-ethyl; EL 177, d. h. 5-Cyano-1-(1,1-dimethylethyl)-N-methyl-3H-pyrazole-4-carboxamid; endothal; EPTC; esprocarb; ethalfluralin; ethametsulfuron-methyl; ethidimuron; ethiozin; ethofumesate; F5231, d. h. N-[2-Chlor-4-fluor-5-[4-(3-fluorpropyl)-4,5-dihydro-5-oxo-1H-tetrazol-1-yl]-phenyl]-ethansulfonamid; F6285, d. h. 1-[5-(N-Methylsulfonyl)-amino-2,4-dichlorophenyl]-3-methyl-4-difluoromethyl-1,2,4-triazol-5-on; fenoprop; fenoxan, clomazon; fenoxaprop-ethyl; fenuron; flamprop-methyl; flazasulfuron; fluazifop und dessen Esterderivate; fluchloralin; flumetsulam; N-[2,6-Difluorphenyl]-5-methyl-(1,2,4)-triazolo[1,5a]pyrimidin-2-sulfonamid; flumeturon; flumipropyn; fluorodifen; fluoroglycofen-ethyl; fluridone; flurochloridone; fluroxypyr; flurtamone; fomesafen; fosamine; furyloxyfen; glufosinate; glyphosate; halosafen; haloxyfop und dessen Esterderivate; hexazinone; Hw 52, d. h. N-(2,3-Dichlorphenyl)-4-(ethoxymethoxy)-benzamid; imazamethabenz-methyl; imazapyr; imazaquin; imazethamethapyr; imazethapyr; imazosulfuron; ioxynil; isocarbamid; isopropalin; isoproturon; isouron; isoxaben; isoxapyrifop; karbutilate; lactofen; lenacil; linuron; MCPA; MCPB; mecoprop; mefenacet; mefluidid; metamitron; metazachlor; methabenzthiazuron; metham; methazole; methoxyphenone; methyldymron; metobromuron; metolachlor; metoxuron; metribuzin; metsulfuron-methyl; MH; molinate; monalide; monocarbamide dihydrogensulfate; monolinuron; monuron; MT 128, d. h. 6-Chlor-N-(3-chlor-2-propenyl)-5-methyl-tuphenyl-3-pyridazinamin; MT 5950, d. h. N-[3-Chlor-4-(1-methylethyl)-phenyl]-2-methylpentanamid; naproanilide; napropamide; naptalam; NC 310, d. h. 4-(2,4-dichlorbenzoyl)-1-methyl-5-benzyloxypyrazol; neburon; nicosulfuron; nipyraclophen; nitralin; nitrofen; nitrofluorfen; norflurazon; orbencarb; oryzalin; oxadiazon; oxyfluorfen; paraquat; pebulate; pendimethalin; perfluidone; phenmedipham; phenisopham; phenmedipham; picloram; piperophos; piributicarb; pirifenop-butyl; pretilachlor; primisulfuronmethyl; procyazine; prodiamine; profluralin; proglinazine-ethyl; prometon; prometryn; propachlor; propanil; propaquizafop und dessen Esterderivate; propazine; propham; propyzamide; prosulfalin; prosulfocarb; prynachlor; pyrazolinate; pyrazon; pyrazosulfuron-ethyl; pyrazoxyfen; pyridate; quinclorac; quinmerac; quinofop und dessen Esterderivate, quizalofop und dessen Esterderivate; quizalofop-ethyl; quizalofop-p-tefuryl; renriduron; dymron; S 275, d. h. 2-[4-Chlor-2-fluor-5-(2-propynyloxy)-phenyl]-4,5,6,7-tetrahydro-2H-indazol; S 482, d. h. 2-[7-Fluor-3,4-dihydro-3-oxo-4-(2-propynyl)-2H-1,4-benzoxazin-6-yl]-4,5,6,7-tetrahydro-1H-isoindol-1,3(2H)-dion; secbumeton; sethoxydim; siduron; simazine; simetryn; SN 106279, d. h. 2-[[7-[2-Chlor-4-(trifluor-methyl)-phenoxy]-2-naphthalenyl]-oxy]-propansäure und -methylester; sulfometuron-methyl; sulfazuron; flazasulfuron; TCA; tebutam; tebuthiuron; terbacil; terbucarb; terbuchlor; terbumeton; terbuthylazine; terbutryn; TFH 450, d. h. N,N-Diethyl-3-[(2-ethyl-6-methylphenyl)-sulfonyl]-1H-1,2,4-triazol-1-carboxamid; thiazafluron; thifensulfuron-methyl; thiobencarb; tiocarbazil; tralkoxydim; tri-allate; triasulfuron; triazofenamide; tribenuron-methyl; triclopyr; tridiphane; trietazine; trifluralin; trimeturon; vernolate; WL 110547, d. h. 5-Phenoxy-1-[3-(trifluormethyl)-phenyl]-1H-tetrazol.

Mit den äußeren Bedingungen wie Temperatur, Feuchtigkeit, der Art des verwendeten Herbizids, u. a. variiert die erforderliche Aufwandmenge der erfindungsgemäßen Verbindungen der Formel (A). Sie kann innerhalb weiter Grenzen variiert werden, z. B. zwischen 0,001 und 10,0 kg/ha oder mehr Aktivsubstanz, vorzugsweise liegt sie jedoch zwischen 0,005 und 5 kg/ha.

Folgende Beispiele dienen zur Erläuterung der Erfindung:

### A. Formulierungsbeispiele

a) Ein Staubmittel wird erhalten, indem man 10 Gew.-Teile einer Verbindung der Formel (B1) und/oder (B2) oder eines Wirkstoffgemischs aus einem herbiziden Wirkstoff der Formel (A) und einem Safener der Formel (B1) und/oder (B2) und 90 Gew.-Teile Talkum als Inertstoff mischt und in einer Schlagmühle zerkleinert.
b) Ein in Wasser leicht dispergierbares, benetzbares Pulver wird erhalten, indem man 25 Gewichtsteile einer Verbindung der Formel (B1) und/oder (B2) oder eines Wirkstoffgemischs aus einem herbiziden Wirkstoff der Formel (A) und einem Safener der Formel (B1) und/oder (B2), 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat wird erhalten, indem man 20 Gewichtsteile einer Verbindung der Formel (B1) und/oder (B2) oder eines Wirkstoffgemischs aus einem herbiziden Wirkstoff der Formel (A) und einem Safener der Formel (B1) und/oder (B2), 6 Gew.-Teilen Alkylphenolpolyglykolether (®Triton X 207), 3 Gew.-Teilen Isotridecanolpolyglykolether (8 EO) und 71 Gew.- Teilen paraffinischem Mineralöl (Siedebereich z.B. ca. 255 bis über 277°C) mischt und in einer Reibkugelmühle auf eine Feinheit von unter 5 Mikron vermahlt.
d) Ein emulgierbares Konzentrat wird erhalten aus 15 Gew.-Teilen einer Verbindung der Formel (B1) und/oder (B2) oder eines Wirkstoffgemischs aus einem herbiziden Wirkstoff der Formel (A) und einem Safener der Formel (B1) und/oder (B2), 75 Gew.Teilen Cyclohexanon als Lösemittel und 10 Gew.-Teilen oxethyliertes Nonylphenol als Emulgator.
e) Ein in Wasser dispergierbares Granulat wird erhalten, indem man
   - 75 Gew.-Teile: einer Verbindung der Formel (B1) und/oder (B2) oder eines Wirkstoffgemischs aus einem herbiziden Wirkstoff der Formel (A) und einem Safener der Formel B1 und/oder B2,
   - 10 Gew.-Teile: ligninsulfonsaures Calcium,
   - 5 Gew.-Teile: Natriumlaurylsulfat,
   - 3 Gew.-Teile: Polyvinylalkohol und
   - 7 Gew.-Teile: Kaolin
   mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man
   - 25 Gew.-Teil(e): einer Verbindung der Formel (B1) und/oder (B2) oder eines Wirkstoffgemischs aus einem herbiziden Wirkstoff der Formel (A) und einem Safener der Formel (B1) und/oder (B2),
   - 5 Gew.-Teile: 2,2'-dinaphthylmethan-6,6'-disulfonsaures Natrium,
   - 2 Gew.-Teile: oleoylmethyltaurinsaures Natrium,
   - 1 Gew.-Teile: Polyvinylalkohol,
   - 17 Gew.-Teile: Calciumcarbonat und
   - 50 Gew.-Teile: Wasser
   auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

### Biologische Beispiele

### Beispiel 1

Weizen und Gerste (als Kulturpflanzen) und Windhalm (als Beispiel für eine Schadpflanze) wurden im Gewächshaus in Plastiktöpfen bis zum 3-Blattstadium herangezogen und dann mit einem Gemisch aus dem Herbizid und dem Safener im Nachlaufverfahren behandelt. Das Herbizid der Formel (A) und die Verbindungen der Formel (B) wurden dabei in Form wäßriger Suspensionen bzw. Emulsionen mit einer Wasseraufwandmenge von umgerechnet 300 l/ha ausgebracht. 4 Wochen nach der Behandlung wurden die Pflanzen visuell auf jede Art von Schädigung durch die ausgebrachten Herbizide bonitiert, wobei insbesondere das Ausmaß der anhaltenden Wachstumshemmung berücksichtigt wurde. Die Bewertung erfolgte in Prozentwerten im Vergleich zu unbehandelten Kontrollen (siehe Tabelle 1).

Selbst bei starken Überdosierungen des Herbizids werden bei den Kulturpflanzen auftretende schwere Schädigungen deutlich reduziert, geringere Schäden völlig aufgehoben. Die herbizide Wirksamkeit der Verbindungen H1 und H2 wurde durch die Zugabe der erfindungsgemäßen Safener nicht beeinträchtigt, wie am Beispiel vom Windhalm gezeigt wurde. Erfindungsgemäße Mischungen aus Herbiziden (A) und Safenern (B) eignen sich deshalb in ausgezeichneter Weise zur selektiven Unkrautbekämpfung in Getreidekulturen.

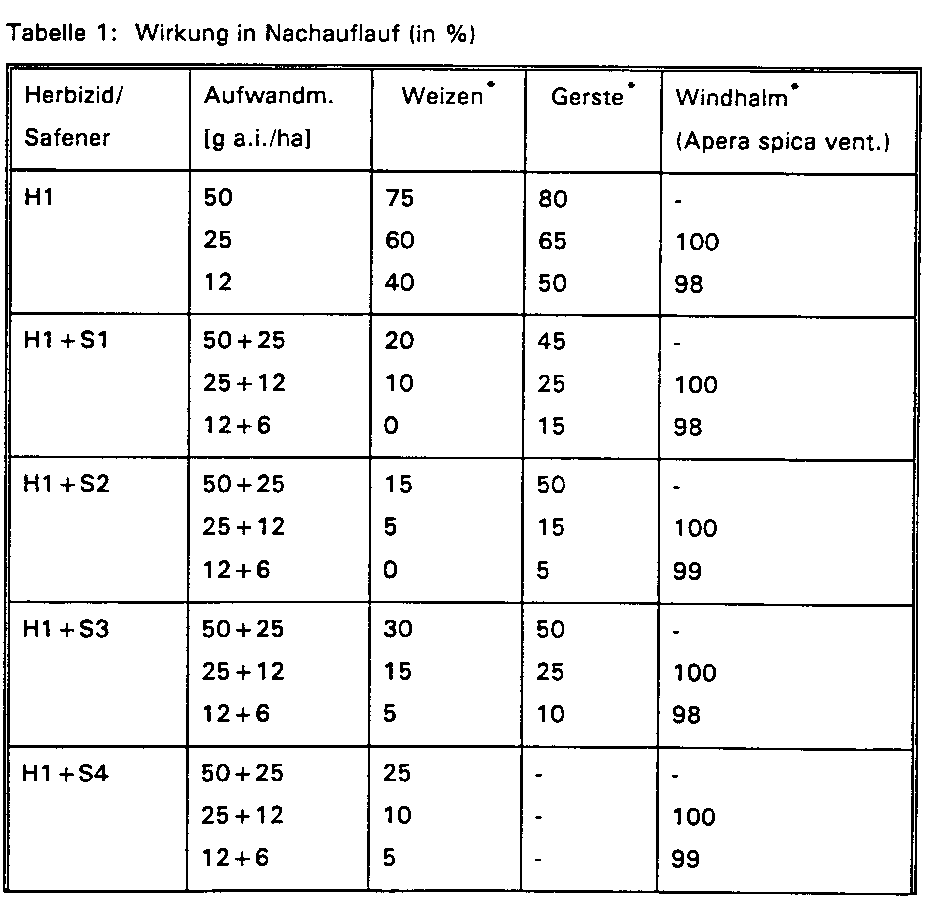

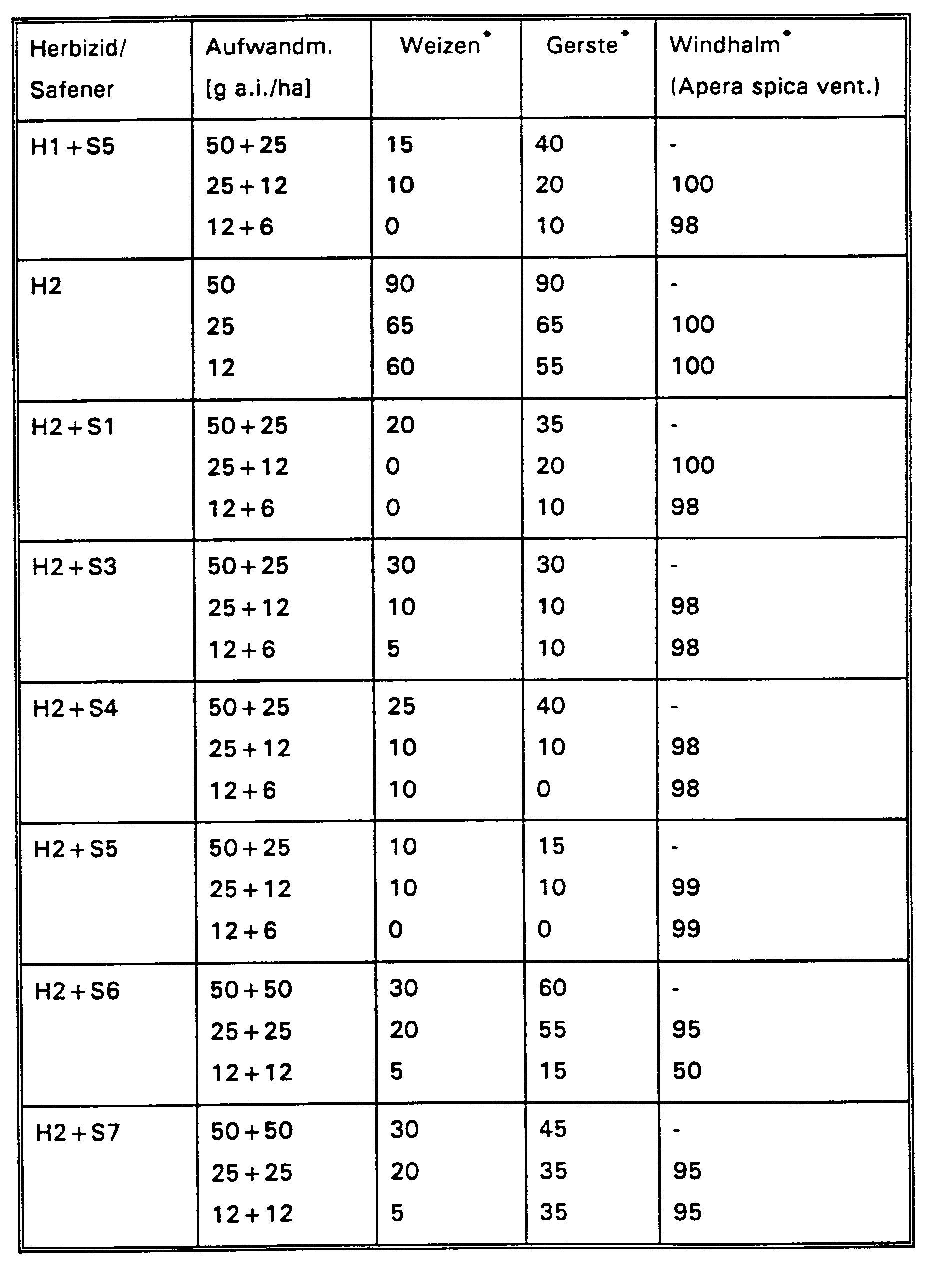

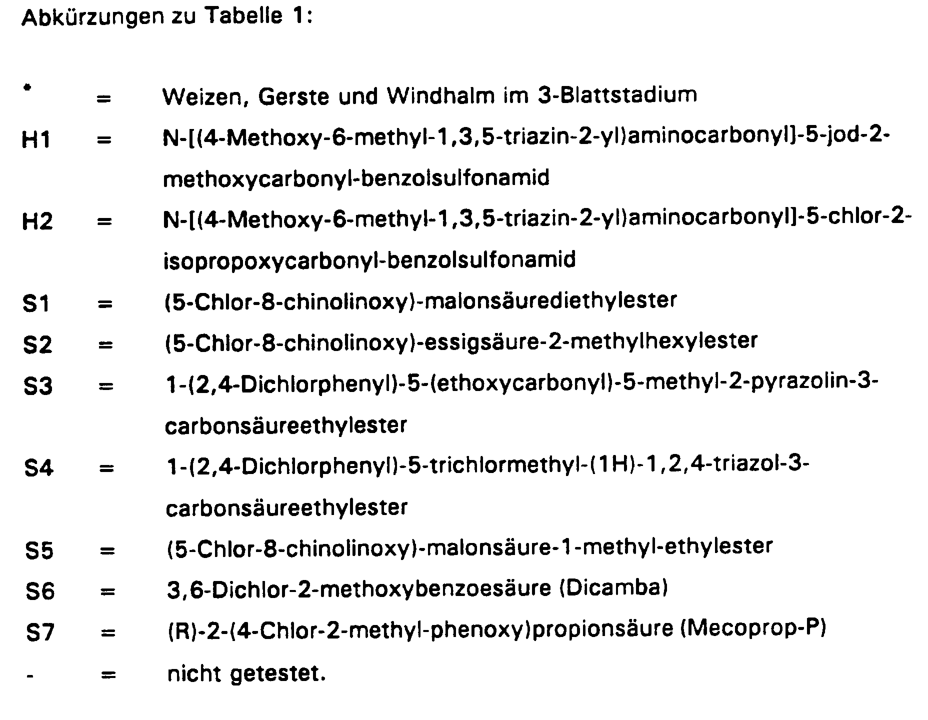

### Beispiel 2

Maispflanzen der Sorten Felix und Dea wurden im Gewächshaus in Plastiktöpfen bis zum 4-Blattstadium herangezogen und mit einem Gemisch aus Herbiziden (A) und Safenern (B) im Nachlaufverfahren behandelt. Die Wirkstoffe wurden dabei in Form wäßriger Suspensionen bzw. Emulsionen mit einer Wasseraufwandmenge von umgerechnet 300l/ha ausgebracht. 4 Wochen nach der Behandlung wurden die Pflanzen visuell auf jede Art von Schädigungen durch die ausgebrachten Herbizide bonitiert, wobei insbesondere das Ausmaß der anhaltenden Wachstumshemmung berücksichtigt wurde (Tabelle 2).

Die Bewertung erfolgte in Prozentwerten im Vergleich zu unbehandelten Kontrollen.

Die Ergebnisse zeigen, daß die Verbindungen (B) Herbizidschäden an den Maispflanzen effektiv reduzieren können. Selbst bei starken Überdosierungen der Herbizide werden bei den Kulturpflanzen auftretende schwere Schädigungen deutlich reduziert und geringere Schäden völlig aufgehoben. Mischungen aus Herbiziden (A) und Safenern (B) eignen sich deshalb in ausgezeichneter Weise zur selektiven Unkrautbekämpfung in Mais.

**Tabelle 2**

| Wirkung im Nachauflauf in % | | | |
|---|---|---|---|
| Herbizid/Safener | Aufwandmenge [g a.i./ha] | Mais (Felix)* | Mais (Dea)* |
| H1 | 50 | 30 | 20 |
| | 25 | 20 | 10 |
| | 12 | 10 | 0 |
| H1 + S5 | 50 + 50 | 0 | 0 |
| | 25 + 25 | 0 | 0 |
| | 12 + 12 | 0 | 0 |

| | | | |
|---|---|---|---|
| Abkürzungen zu Tabelle 2: * = 3-4-Blattstadium H1 = siehe Tabelle 1 S5 = siehe Tabelle 1 | | | |

### Beispiel 3

Reis wurde in Plastiktöpfen ausgesät und im Gewächshaus unter optimalen Wachstumsbedingungen angezogen. Im 4-Blattstadium wurden die Pflanzen dann mit den Herbiziden (A) und Safenern (B) behandelt. 3 Wochen nach der Behandlung wurden die Pflanzen auf jede Art von Schädigung durch die Herbizide bonitiert, wobei insbesondere das Ausmaß der anhaltenden Wachstumshemmung und Ausdünnung betrachtet wurde. Die Ergebnisse zeigen, daß die Safener die Herbizidschäden an Reis effektiv reduzieren.

Mischungen aus Herbiziden (A) und Safenern (B) eignen sich also zur selektiven Unkrautbekämpfung in Reis. Die hebizide Wirksamkeit der eingesetzten Herbizide gegen Schadpflanzen wurde durch die Zugabe der erfindungsgemäßen Safener nicht beeinträchtigt; sie entsprach bei den verwendeten Aufwandmengen den Vergleichswerten, wie sie bei der Anwendung der Herbizide alleine erzielt wurde.

## Patentansprüche

1. Herbizid-Safener-Kombinationen, enthaltend
A) mindestens einen herbiziden Wirkstoff aus der Gruppe der substituierten Phenylsulfonylharnstoffe der Formel (A) und deren Salze, 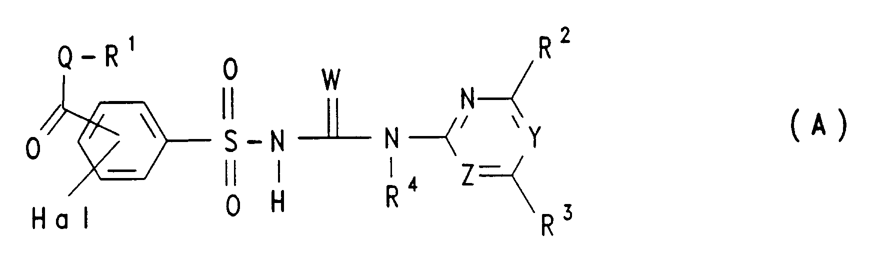 worin
Q Sauerstoff, Schwefel oder -N(R)-, wobei R = H, (C₁-C₄)-Alkyl oder (C₁-C₄)-Alkoxy ist,
W Sauerstoff oder Schwefel,
Y, Z unabhängig voneinander CH oder N, wobei Y und Z nicht gleichzeitig CH sind,
R¹ Wasserstoff; (C₁-C₁₂)-Alkyl; (C₂-C₁₀)-Alkenyl; (C₂-C₁₀)-Alkinyl; (C₁-C₆)-Alkyl, das ein- oder mehrfach durch gleiche oder verschiedene Reste aus der Gruppe Halogen, (C₁-C₄)-Alkoxy, (C₁-C₄)-Alkylthio, -CN, (C₂-C₅)-Alkoxycarbonyl und (C₂-C₆)-Alkenyl substituiert ist; (C₃-C₈)-Cycloalkyl, das unsubstituiert oder durch einen oder mehrere Reste aus der Gruppe (C₁-C₄)-Alkyl, (C₁-C₄)-Alkoxy, (C₁-C₄)-Alkylthio und Halogen substituiert ist; (C₅-C₈)-Cycloalkenyl; Phenyl-(C₁-C₄)-alkyl, das im Phenylrest unsubstituiert oder substituiert ist; oder einen Rest der Formeln A-1 bis A-10, 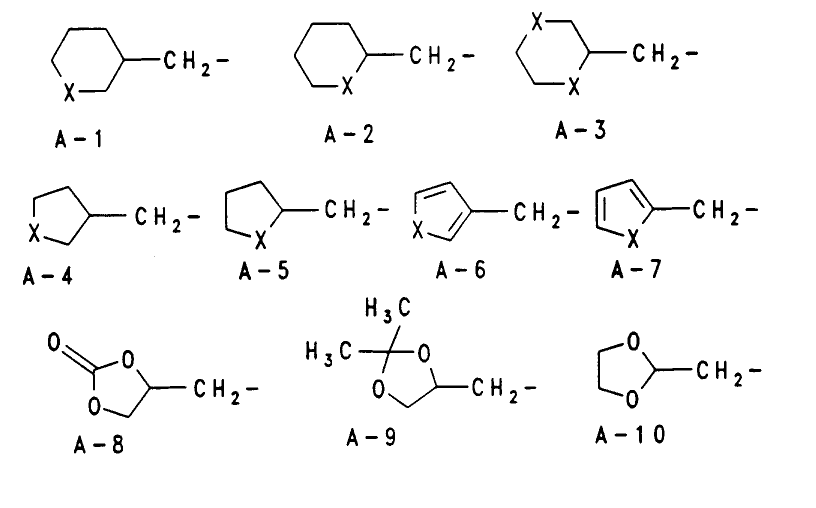 worin
X O, S, S(O) oder SO₂ bedeutet,
R² Wasserstoff, Halogen, (C₁-C₃)-Alkyl oder (C₁-C₃)-Alkoxy, wobei die beiden letztgenannten Reste unsubstituiert oder ein- oder mehrfach durch Halogen oder (C₁-C₃)-Alkoxy substituiert sind;
R³ Wasserstoff, Halogen, (C₁-C₃)-Alkyl, (C₁-C₃)-Alkoxy oder (C₁-C₃)-Alkylthio, wobei die letztgenannten 3 Reste unsubstituiert oder ein- oder mehrfach durch Halogen oder ein- oder zweifach durch (C₁-C₃)-Alkoxy oder (C₁-C₃)-Alkylthio substituiert sind; oder einen Rest der Formel NR⁵R⁶, (C₃-C₆)-Cycloalkyl, (C₂-C₄)-Alkenyl, (C₁-C₄)-Alkinyl, (C₃-C₄)-Alkenyloxy oder (C₃-C₆)-Alkinyloxy;
R⁴ Wasserstoff oder (C₁-C₄)-Alkyl;
R⁵ und R⁶ unabhängig voneinander Wasserstoff, (C₁-C₄)-Alkyl, (C₃-C₄)-Alkenyl, (C₁-C₄)-Haloalkyl oder (C₁-C₄)-Alkoxy und
Hal Fluor, Chlor, Brom oder Jod bedeuten,
und
B) mindestens eine Verbindung aus der Gruppe der Verbindungen der Formeln (B1) und (B2), 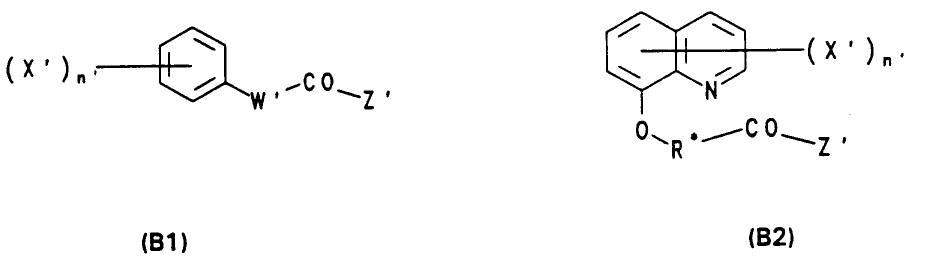 in welchen
X' Wasserstoff, Halogen, (C₁-C₄)-Alkyl, (C₁-C₄)-Alkoxy, Nitro oder (C₁-C₄)-Halogenalkyl bedeutet,
Z' OR⁷, SR⁷ oder NR⁷R⁸ bedeutet oder für einen gesättigten oder ungesättigten 3- bis 7-gliedrigen Heterocyclus mit mindestens einem N-Atom und bis zu 3 Heteroatomen steht, der über das N-Atom mit der Carbonylgruppe verbunden ist und unsubstituiert oder durch Reste aus der Gruppe (C₁-C₄)-Alkyl, (C₁-C₄)-Alkoxy oder gegebenenfalls substituiertes Phenyl substituiert ist,
R* eine (C₁ oder C₂)-Alkandiylkette bedeutet, die noch mit ein oder zwei (C₁-C₄)-Alkylresten oder mit [(C₁-C₃)-Alkoxy]-carbonyl substituiert sein kann,
R⁷ Wasserstoff, (C₁-C₁₈)-Alkyl, (C₃-C₁₂)-Cycloalkyl, (C₂-C₈)-Alkenyl oder (C₂-C₈)-Alkinyl bedeutet,
wobei die vorstehenden C-haltigen Reste unsubstituiert oder ein- oder mehrfach durch gleiche oder verschiedene Reste aus der Gruppe enthaltend Halogen, Hydroxy, (C₁-C₈)-Alkoxy, (C₂-C₈)-Alkylmercapto, (C₂-C₈)-Alkenylmercapto, (C₂-C₈)-Alkinylmercapto, (C₂-C₈)-Alkenyloxy, (C₂-C₈)-Alkinyloxy, (C₃-C₇)-Cycloalkyl, (C₃-C₇)-Cycloalkoxy, Cyano, Mono- und Di-(C₁-C₄-alkyl)-amino, Carboxy, (C₁-C₈)-Alkoxycarbonyl, (C₂-C₈)-Alkenyloxycarbonyl, (C₁-C₈)-Alkylmercaptocarbonyl, (C₂-C₈)-Alkinyloxycarbonyl, (C₁-C₈)-Alkylcarbonyl, (C₂-C₈)-Alkenylcarbonyl, (C₂-C₈)-Alkinylcarbonyl, 1-(Hydroxyimino)-(C₁-C₆)alkyl, 1-[(C₁-C₄)-Alkylimino]-(C₁-C₄)-alkyl, 1-[(C₁-C₄)-Alkoxyimino]-(C₁-C₆)-alkyl, (C₁-C₈)-Alkylcarbonylamino, (C₂-C₈)-Alkenylcarbonylamino, (C₂-C₈)-Alkinylcarbonylamino, Aminocarbonyl, (C₁-C₈)-Alkylaminocarbonyl, Di-(C₁-C₆)-alkylaminocarbonyl, (C₂-C₆)-Alkenylaminocarbonyl, (C₂-C₆)-Alkinylaminocarbonyl, (C₁-C₈)-Alkoxycarbonylamino, (C₁-C₈)-Alkylaminocarbonylamino, (C₁-C₆)-Alkylcarbonyloxy, das unsubstituiert oder durch Halogen, Nitro, (C₁-C₄)-Alkoxy oder gegebenenfalls substituiertes Phenyl substituiert ist, (C₂-C₆)-Alkenylcarbonyloxy, (C₂-C₆)-Alkinylcarbonyloxy, (C₁-C₈)-Alkylsulfonyl, Phenyl, Phenyl-(C₁-C₆)-alkoxy, Phenyl-(C₁-C₆)-alkoxycarbonyl, Phenoxy, Phenoxy-(C₁-C₆)-alkoxy, Phenoxy-(C₁-C₆)-alkoxycarbonyl, Phenylcarbonyloxy, Phenylcarbonylamino, Phenyl-(C₁-C₆)-alkylcarbonylamino, wobei die letztgenannten 9 Reste im Phenylring unsubstituiert oder ein- oder mehrfach, vorzugsweise bis zu dreifach durch gleiche oder verschiedene Reste aus der Gruppe Halogen, (C₁-C₄)-Alkyl, (C₁-C₄)-Alkoxy, (C₁-C₄)-Halogenalkyl, (C₁-C₄)-Halogenalkoxy und Nitro substituiert sind, und Reste der Formeln -SiR'₃, -O-SiR'₃, R'₃Si-(C₁-C₈)-alkoxy, -CO-O-NR'₂, -O-N = CR'₂, -N = CR'₂, -O-NR'₂, CH(OR')₂ und -O-(CH₂)ₘ-CH(OR')₂, worin die R' in den genannten Formeln unabhängig voneinander Wasserstoff, (C₁-C₄)-Alkyl, Phenyl, das unsubstituiert oder ein- oder mehrfach, vorzugsweise bis zu dreifach durch gleiche oder verschiedene Reste aus der Gruppe Halogen, (C₁-C₄)-Alkyl, (C₁-C₄)-Alkoxy, (C₁-C₄)-Halogenalkyl, (C₁-C₄)-Halogenalkoxy und Nitro substituiert ist, oder paarweise eine (C₂-C₆)-Alkandiylkette und m = 0 bis 6 bedeuten, und einen substituierten Alkoxyrest der Formel R''O-CHR'''(OR'')-(C₁-C₆)-alkoxy, worin die R'' unabhängig voneinander (C₁-C₄)-Alkyl oder zusammen (C₁-C₆)-Alkandiyl und R''' Wasserstoff oder (C₁-C₄)-Alkyl bedeuten, substituiert sind,
R⁸ Wasserstoff, (C₁-C₆)-Alkyl, (C₁-C₆)-Alkoxy oder gegebenenfalls substituiertes Phenyl bedeutet,
n' eine ganze Zahl von 1 bis 5,
W' ein divalenter heterocyclischer Rest einer der Formeln (W1) bis (W4) bedeutet, 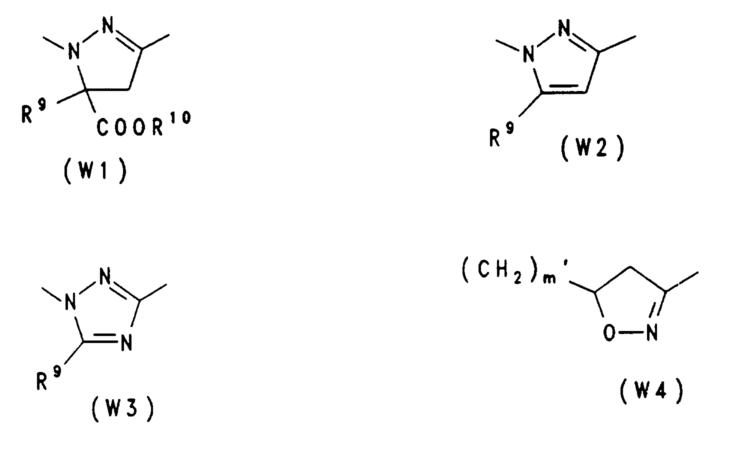
R⁹ Wasserstoff, (C₁-C₈)-Alkyl, (C₁-C₈)-Halogenalkyl, (C₃-C₁₂)-Cycloalkyl oder gegebenenfalls substituiertes Phenyl bedeutet und
R¹⁰ Wasserstoff, (C₁-C₈)-Alkyl, (C₁-C₈)-Halogenalkyl, (C₁-C₄)-Alkoxy-(C₁-C₄)-alkyl, (C₁-C₆)-Hydroxyalkyl, (C₃-C₁₂)-Cycloalkyl oder Tri-(C₁-C₄)-alkyl-silyl bedeutet und
m' 0 oder 1 bedeutet.

2. Herbizid-Safener-Kombination nach Anspruch 1, dadurch gekennzeichnet, daß im Herbizid der Formel (A) oder dessen Salz
R¹ Wasserstoff; (C₁-C₆)-Alkyl; (C₂-C₆)-Alkenyl; (C₂-C₆)-Alkinyl; (C₁-C₄)-Alkyl, das ein- bis vierfach durch Reste aus der Gruppe Halogen, (C₁-C₂)-Alkoxy, (C₁-C₂)-Alkylthio, (C₂-C₃)-Alkoxycarbonyl und (C₂-C₄)-Alkenyl substituiert ist; (C₅-C₆)-Cycloalkyl, das unsubstituiert oder durch einen oder mehrere Reste aus der Gruppe (C₁-C₄)-Alkyl, (C₁-C₄)-Alkoxy, (C₁-C₄)-Alkylthio und Halogen substituiert ist; (C₅-C₆)-Cycloalkenyl; Benzyl, das im Phenylrest unsubstituiert oder durch einen bis drei Reste aus der Gruppe Halogen, (C₁-C₂)-Alkyl, (C₁-C₂)-Alkoxy, (C₁-C₂)-Haloalkyl, (C₁-C₂)-Alkylthio und (C₂-C₄)-Alkoxycarbonyl substituiert oder einen Rest der genannten Formeln A-1 bis A-10 und
Hal Chlor, Brom oder Jod,
R² Wasserstoff, Halogen, (C₁-C₂)-Alkyl, (C₁-C₂)-Alkoxy, wobei die beiden letztgenannten Reste unsubstituiert oder ein- oder mehrfach durch Halogen oder (C₁-C₃)-Alkoxy substituiert sind,
R³ Wasserstoff, Halogen, (C₁-C₂)-Alkyl, (C₁-C₂)-Alkoxy, oder (C₁-C₂)-Alkylthio, wobei die vorgenannten alkylhaltigen Reste unsubstituiert oder ein- oder mehrfach durch Halogen oder ein- oder zweifach durch (C₁-C₂)-Alkoxy oder (C₁-C₂)-Alkylthio substituiert sind; oder einen Rest der Formel NR⁵R⁶;
R⁴ Wasserstoff oder Methyl und
R⁵ und R⁶ unabhängig voneinander Wasserstoff oder (C₁-C₂)-Alkyl bedeuten.

3. Herbizid-Safener-Kombination nach Anspruch 1 oder 2, dadurch gekennzeichnet, daß im Safener der Formel (B1) oder (B2)
R⁷ Wasserstoff, (C₁-C₈)-Alkyl oder (C₃-C₇)-Cycloalkyl bedeutet, wobei die vorstehenden C-haltigen Reste unsubstituiert sind oder ein- oder mehrfach durch Halogen oder ein- oder zweifach substituiert sind durch Reste aus der Gruppe Hydroxy, (C₁-C₄)-Alkoxy, Carboxy, (C₁-C₄)-Alkoxycarbonyl, (C₂-C₆)-Alkenyloxycarbonyl, (C₂-C₆)-Alkinyloxycarbonyl, 1-(Hydroxyimino)-(C₁-C₄)-alkyl, 1-[(C₁-C₄)-Alkylimino]-(C₁-C₄)-alkyl, 1-[(C₁-C₄)-Alkoxyiminol-(C₁-C₄)-alkyl und Reste der Formeln -SiR'₃, -O-N = CR'₂, -N =CR'₂ und -O-NR'₂, worin die R' in den genannten Formeln unabhängig voneinander Wasserstoff oder (C₁-C₄)-Alkyl oder paarweise eine (C₄-C₅)-Alkandiylkette bedeuten,
R⁹ Wasserstoff, (C₁-C₈)-Alkyl, (C₁-C₆)-Halogenalkyl, (C₃-C₇)-Cycloalkyl oder Phenyl bedeutet und
R¹⁰ Wasserstoff, (C₁-C₈)-Alkyl, (C₁-C₈)-Halogenalkyl, (C₁-C₄-Alkoxy)-(C₁-C₄)-alkyl, (C₁-C₆)-Hydroxyalkyl, (C₃-C₇)-Cycloalkyl oder Tri-(C₁-C₄)-alkylsilyl bedeutet und
X' Wasserstoff, Halogen, Methyl, Ethyl, Methoxy, Ethoxy, (C₁ oder C₂)-Halogenalkyl bedeutet.

4. Herbizid-Safener-Kombination nach einem der Ansprüche 1 bis 3, dadurch gekennzeichnet, daß im Safener der Formel (B2)
W' (W3) bedeutet,
X' Wasserstoff, Halogen oder (C₁-C₂)-Halogenalkyl bedeutet,
n' 1, 2 oder 3 ist,
Z' einen Rest der Formel OR⁷ bedeutet,
R⁷ Wasserstoff, (C₁-C₈)-Alkyl, (C₁-C₄)-Halogenalkyl, (C₁-C₄)-Hydroxyalkyl, (C₃-C₇)-Cycloalkyl, (C₁-C₄)-Alkoxy-(C₁-C₄)-alkyl, Tri-(C₁-C₂)-alkylsilyl und
R⁹ (C₁-C₈)-Alkyl oder (C₁-C₄)-Halogenalkyl bedeutet.

5. Herbizid-Safener-Kombination nach einem der Ansprüche 1 bis 4, dadurch gekennzeichnet, daß sie in Form einer Zubereitung (herbizides Mittel) formuliert ist und 0, 1 bis 95 Gew.-% Wirkstoffe (A) und (B) und 1 bis 99,9 Gew.-% üblicher Formulierungshilfsmittel enthält.

6. Herbizid-Safener-Kombination nach einem der Ansprüche 1 bis 5, dadurch gekennzeichnet, daß sie die Wirkstoffe (A) und (B) im Gewichtsverhältnis von 1:100 bis 100:1 enthält.

7. Verfahren zum Schutz von Kulturpflanzen vor phytotoxischen Nebenwirkungen von Herbiziden (A), dadurch gekennzeichnet, daß eine wirksame Menge eines Safeners des Typs (B) vor, nach oder gleichzeitig mit dem Herbizid (A) auf die Pflanzen, Pflanzenteile, Pflanzensamen oder die Anbauflächen appliziert wird, wobei die Kombination aus Herbizid (A) und Safener (B) wie nach einem der Ansprüche 1 bis 6 definiert ist.

8. Verfahren nach Anspruch 7, dadurch gekennzeichnet, daß die Kulturpflanzen Getreidepflanzen, Reispflanzen oder Maispflanzen sind.

9. Verfahren nach Anspruch 7 oder 8, dadurch gekennzeichnet, daß die Verbindungen der Formel (A) oder deren Salz in einer Aufwandmenge von 0,001 bis 10 kg/ha Aktivsubstanz und einem Gewichtsverhältnis Safener:Herbizid von 1:100 bis 100:1 appliziert werden.

10. Verwendung der Verbindung vom Typ (B) als Safener zum Schützen von Kulturpflanzen gegen phytotoxische Nebenwirkungen von Herbiziden (A), wobei die Herbizid-Safener-Kombination nach einem der Ansprüche 1 bis 6 definiert ist.

## Claims

1. A herbicide/safener combination, comprising
A) at least one herbicidal active substance from the group consisting of the substituted phenylsulfonylureas of the formula (A) and their salts, 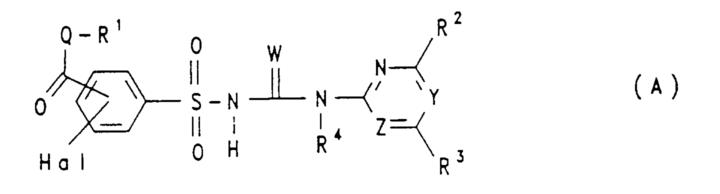 in which
Q is oxygen, sulfur or -N(R)-, where R is H, (C₁-C₄)-alkyl or (C₁-C₄)-alkoxy,
W is oxygen or sulfur,
Y and Z independently of one another are CH or N, where Y and Z are not simultaneously CH,
R¹ is hydrogen; (C₁-C₁₂)-alkyl; (C₂-C₁₀)-alkenyl; (C₂-C₁₀)-alkynyl; (C₁-C₆)-alkyl, which is monosubstituted or polysubstituted by identical or different radicals selected from the group consisting of halogen, (C₁-C₄) -alkoxy, (C₁-C₄)-alkylthio, -CN, (C₂-C₅)-alkoxycarbonyl and (C₂-C₆)-alkenyl; (C₃-C₈)cycloalkyl which is unsubstituted or substituted by one or more radicals selected from the group consisting of (C₁-C₄)-alkyl, (C₁-C₄) -alkoxy, (C₁-C₄)-alkylthio and halogen; (C₅-C₈)-cycloalkenyl; phenyl-(C₁-C₄)-alkyl which is unsubstituted or substituted in the phenyl radical; or a radical of the formulae A-1 to A-10, 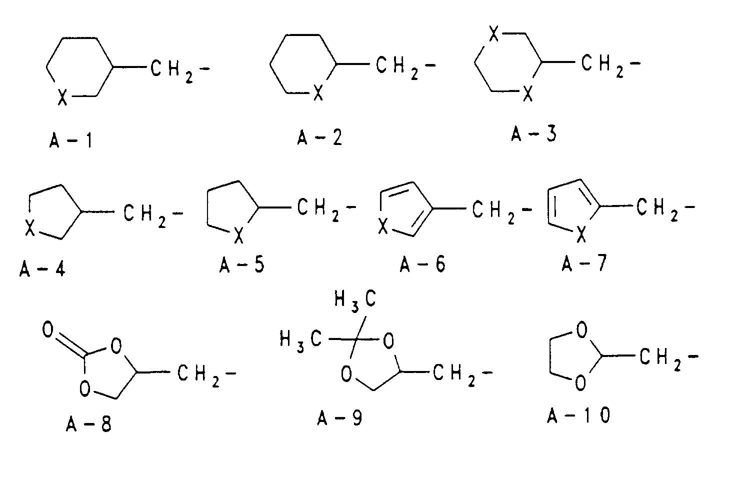 in which
X is O, S, S(O) or SO₂,
R² is hydrogen, halogen, (C₁-C₃)-alkyl or (C₁-C₃)-alkoxy, the two last-mentioned radicals being unsubstituted or mono- or polysubstituted by halogen or (C₁-C₃)-alkoxy;
R³ is hydrogen, halogen, (C₁-C₃)-alkyl, (C₁-C₃)-alkoxy or (C₁-C₃)-alkylthio, the last-mentioned 3 radicals being unsubstituted or mono- or polysubstituted by halogen or mono- or disubstituted by (C₁-C₃)-alkoxy or (C₁-C₃)-alkyl-thio; or a radical of the formula NR⁵R⁶, (C₃-C₆)-cycloalkyl, (C₂-C₄)-alkenyl, (C₁-C₄)-alkynyl, (C₃-C₄)-alkenyloxy or (C₃-C₆)-alkynyloxy;
R⁴ is hydrogen or (C₁-C₄)-alkyl;
R⁵ and R⁶ independently of one another are hydrogen, (C₁-C₄)-alkyl, (C₃-C₄)-alkenyl, (C₁-C₄)-haloalkyl or (C₁-C₄)-alkoxy and
Hal is fluorine, chlorine, bromine or iodine,
and
B) at least one compound selected from the group consisting of the compounds of the formulae (B1) and (B2), 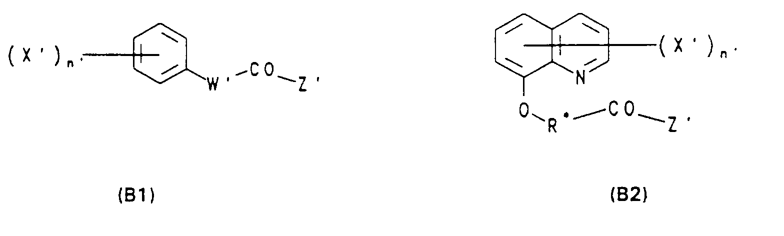 in which
X' is hydrogen, halogen, (C₁-C₄)-alkyl, (C₁-C₄)-alkoxy, nitro or (C₁-C₄)-haloalkyl,
Z' is OR⁷, SR⁷ or NR⁷R⁸, or is a saturated or unsaturated 3- to 7-membered heterocycle having at least one nitrogen atom and up to 3 hetero atoms which is bonded to the carbonyl group via the nitrogen atom and is unsubstituted or substituted by radicals selected from the group consisting of (C₁-C₄) -alkyl, (C₁-C₄) -alkoxy or optionally substituted phenyl,
R* is a (C₁ or C₂)-alkanediyl chain which can additionally be substituted by one or two (C₁-C₄)-alkyl radicals or by [(C₁-C₃)-alkoxy]-carbonyl,
R⁷ is hydrogen, (C₁-C₁₈) -alkyl, (C₁-C₁₂)-cycloalkyl, (C₂-C₈)-alkenyl or (C₂-C₈)-alkynyl,
the abovementioned carbon-containing radicals being unsubstituted or mono- or polysubstituted by identical or different radicals selected from the group consisting of halogen, hydroxyl, (C₁-C₈)-alkoxy, (C₁-C₈)-alkylmercapto, (C₂-C₈)-alkenylmercapto, (C₂-C₈)-alkynylmercapto, (C₂-C₈)-alkenyloxy, (C₂-C₈)-alkynyloxy, (C₃-C₇)-cycloalkyl, (C₃-C₇)-cycloalkoxy, cyano, mono- and di-(C₁-C₄-alkyl)-amino, carboxyl, (C₁-C₈)-alkoxycarbonyl, (C₂-C₈)-alkenyloxycarbonyl, (C₁-C₉)-alkylmercaptocarbonyl, (C₂-C₈)-alkynyloxycarbonyl, (C₁-C₈)-alkylcarbonyl, (C₂-C₈)-alkenylcarbonyl carbonyl, (C₂-C₈)-alkynylcarbonyl, 1-(hydroxyimino)-(C₁-C₆)-alkyl, 1-[(C₁-C₄)-alkylimino]-(C₁-C₄)-alkyl, 1-[(C₁-C₄)-alkoxyimino]-(C₁-C₆)-alkyl, (C₁-C₈)-alkylcarbonylamino, (C₂-C₈)-alkenyl-carbonylamino, (C₂-C₈)-alkynylcarbonylamino, aminocarbonyl, (C₁-C₈)-alkylaminocarbonyl, di-(C₁-C₆)-alkylaminocarbonyl, (C₂-C₆)-alkenylaminocarbonyl, (C₂-C₆)-alkynylaminocarbonyl, (C₁-C₈)-alkoxycarbonylamino, (C₁-C₈)-alkylaminocarbonylamino, (C₁-C₆)-alkylcarbonyloxy, which is unsubstituted or substituted by halogen, nitro, (C₁-C₄)-alkoxy or optionally substituted phenyl, (C₂-C₆)alkenylcarbonyloxy, (C₂-C₆)-alkynylcarbonyloxy, (C₁-C₈)-alkylsulfonyl, phenyl, phenyl-(C₁-C₆)-alkoxy, phenyl-(C₁-C₆)-alkoxycarbonyl, phenoxy, phenoxy-(C₁-C₆)-alkoxy, phenoxy-(C₁-C₆)-alkoxycarbonyl, phenylcarbonyloxy, phenylcarbonylamino, phenyl-(C₁-C₆)-alkylcarbonylamino, the last-mentioned 9 radicals being unsubstituted or mono- or polysubstituted, preferably up to trisubstituted, in the phenyl ring by identical or different radicals selected from the group consisting of halogen, (C₁-C₄)-alkyl, (C₁-C₄)-alkoxy, (C₁-C₄)-haloalkyl, (C₁-C₄)-haloalkoxy and nitro, and radicals of the formulae -SiR'₃, -O-SiR'₃, R'₃Si-(C₁-C₈)-alkoxy, -CO-O-NR'₂, -O-N=CR'₂, -N=CR'₂, -O-NR'₂, CH(OR')₂ and -O-(CH₂)ₘ-CH(OR')₂, where the R' in the abovementioned formulae independently of one another are hydrogen, (C₁-C₄)-alkyl, phenyl which is unsubstituted or mono- or polysubstituted, preferably up to trisubstituted, by identical or different radicals selected from the group consisting of halogen, (C₁-C₄)-alkyl, (C₁-C₄)-alkoxy, (C₁-C₄)-haloalkyl, (C₁-C₄)-haloalkoxy and nitro, or, in pairs, are a (C₂-C₆)-alkanediyl chain and m is 0 to 6, and a substituted alkoxy radical of the formula R''O-CHR'''(OR'')-(C₁-C₆)-alkoxy, in which the R'' independently of one another are (C₁-C₄)-alkyl or together are (C₁-C₆)-alkanediyl and R''' is hydrogen or (C₁-C₄)-alkyl,
R⁸ is hydrogen, (C₁-C₆)-alkyl, (C₁-C₆)-alkoxy or optionally substituted phenyl,
n' is an integer from 1 to 5,
W' is a divalent heterocyclic radical of one of the formulae (W1) to (W4), 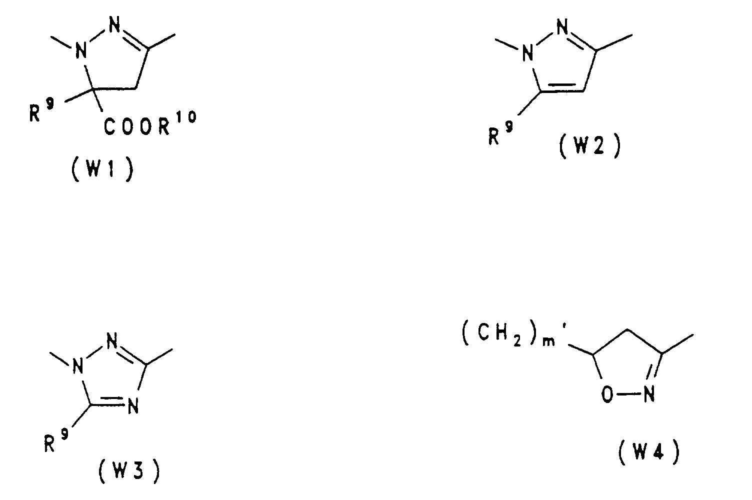
R⁹ is hydrogen, (C₁-C₈)-alkyl, (C₁-C₈)-haloalkyl, (C₃-C₁₂)-cycloalkyl or optionally substituted phenyl and
R¹⁰ is hydrogen, (C₁-C₈)-alkyl, (C₁-C₈)-haloalkyl, (C₁-C₄)-alkoxy-(C₁-C₄)-alkyl, (C₁-C₆)-hydroxyalkyl, (C₃-C₁₂)-cycloalkyl or tri-(C₁-C₄)-alkylsilyl and
m' is 0 or 1.

2. A herbicide/safener combination as claimed in claim 1, wherein, in the herbicide of the formula (A) or in a salt thereof,
R¹ is hydrogen; (C₁-C₆)-alkyl; (C₂-C₆)-alkenyl; (C₂-C₆)-alkynyl; (C₁-C₄)-alkyl which can be monosubstituted to tetrasubstituted by radicals selected from the group consisting of halogen, (C₁-C₂)-alkoxy, (C₁-C₂)-alkylthio, (C₂-C₃)-alkoxycarbonyl and (C₂-C₄)-alkenyl; (C₅-C₆)-cycloalkyl which is unsubstituted or substituted by one or more radicals selected from the group consisting of (C₁-C₄)-alkyl, (C₁-C₄)-alkoxy, (C₁-C₄)-alkylthio and halogen; (C₅-C₆)-cycloalkenyl; benzyl which is unsubstituted or substituted in the phenyl moiety by one to three radicals selected from the group consisting of halogen, (C₁-C₂)-alkyl, (C₁-C₂)-alkoxy, (C₁-C₂)-haloalkyl, (C₁-C₂)-alkylthio and (C₂-C₄)-alkoxycarbonyl, or a radical of the abovementioned formulae A-1 to A-10 and
Hal is chlorine, bromine or iodine,
R² is hydrogen, halogen, (C₁-C₂)-alkyl, (C₁-C₂)-alkoxy, the two last-mentioned radicals being unsubstituted or mono- or polysubstituted by halogen or (C₁-C₃)-alkoxy,
R³ is hydrogen, halogen, (C₁-C₂) -alkyl, (C₁-C₂)-alkoxy or (C₁-C₂)-alkylthio, the abovementioned alkyl-containing radicals being unsubstituted or mono- or polysubstituted by halogen or mono- or disubstituted by (C₁-C₂)-alkoxy or (C₁-C₂)-alkylthio; or a radical of the formula NR⁵R⁶;
R⁴ is hydrogen or methyl and
R⁵ and R⁶ independently of one another are hydrogen or (C₁-C₂)-alkyl.

3. A herbicide/safener combination as claimed in claim 1 or 2, wherein, in the safener of the formula (B1) or (B2),
R⁷ is hydrogen, (C₁-C₈) -alkyl or (C₃-C₇)-cycloalkyl, the abovementioned carbon-containing radicals being unsubstituted or mono- or polysubstituted by halogen or mono- or disubstituted by radicals selected from the group consisting of hydroxyl, (C₁-C₄)-alkoxy, carboxyl, (C₁-C₄)-alkoxycarbonyl, (C₂-C₆)-alkenyloxycarbonyl, (C₂-C₆)-alkynyloxycarbonyl, 1-(hydroxyimino)-(C₁-C₄)-alkyl, 1-[(C₁-C₄)-alkylimino]-(C₁-C₄)-alkyl, 1-[(C₁-C₄)-alkoxyimino]-(C₁-C₄)-alkyl and radicals of the formulae - SiR'₃, -O-N =CR'₂, -N=CR'₂ and -O-NR'₂, where the R' in the abovementioned formulae independently of one another are hydrogen or (C₁-C₄)-alkyl or, in pairs, are a (C₄-C₅)-alkanediyl chain,
R⁹ is hydrogen, (C₁-C₈)-alkyl, (C₁-C₆)-haloalkyl, (C₃-C₇)-cycloalkyl or phenyl and
R¹⁰ is hydrogen, (C₁-C₈)-alkyl, (C₁-C₈)-haloalkyl, (C₁-C₄-alkoxy)-(C₁-C₄)-alkyl, (C₁-C₆)-hydroxyalkyl, (C₃-C₇)-cycloalkyl or tri-(C₁-C₄)-alkylsilyl and
X' is hydrogen, halogen, methyl, ethyl, methoxy, ethoxy, (C₁ or C₂)-haloalkyl.

4. A herbicide/safener combination as claimed in any of claims 1 to 3, wherein, in the safener of the formula (B2),
W' is (W3),
X' is hydrogen, halogen or (C₁-C₂)-haloalkyl,
n' is 1, 2 or 3,
Z' is a radical of the formula OR⁷,
R⁷ is hydrogen, (C₁-C₈)-alkyl, (C₁-C₄)-haloalkyl, (C₁-C₄)-hydroxyalkyl, (C₃-C₇)-cycloalkyl, (C₁-C₄)-alkoxy-(C₁-C₄)-alkyl, tri-(C₁-C₂)-alkylsilyl and
R⁹ is (C₁-C₈)-alkyl or (C₁-C₄)-haloalkyl.

5. A herbicide/safener combination as claimed in any of claims 1 to 4 which is formulated in the form of a preparation (herbicidal composition) and comprises 0.1 to 95 % by weight of active substances (A) and (B) and 1 to 99.9 % by weight of conventional formulation auxiliaries.

6. A herbicide/safener combination as claimed in any of claims 1 to 5, which comprises the active substances (A) and (B) in a ratio by weight of 1:100 to 100:1.

7. A method of protecting crop plants against phytotoxic side-effects of herbicides (A), which comprises applying an effective amount of a type (B) safener to the plants, parts of the plants, seeds of the plants or the areas under cultivation before, after, or simultaneously with, the herbicide (A), the combination of herbicide (A) and safener (B) being defined as in any of claims 1 to 6.

8. The method as claimed in claim 7, wherein the crop plants are cereal plants, rice plants or maize plants.

9. The method as claimed in claim 7 or 8, wherein the compounds of the formula (A) or their salt are applied at an application rate of 0.001 to 10 kg of active ingredient/ha and a ratio by weight of safener:herbicide of 1:100 to 100:1.

10. The use of the type (B) compound as a safener for protecting crop plants against phytotoxic side-effects of herbicides (A), the herbicide/safener combination being defined as in any of claims 1 to 6.

## Revendications

1. Combinaisons d'herbicide-antidote, contenant
A) au moins une substance active herbicide pris dans le groupe comportant des phénylsulfonylurées substituées de formule (A) et ses sels 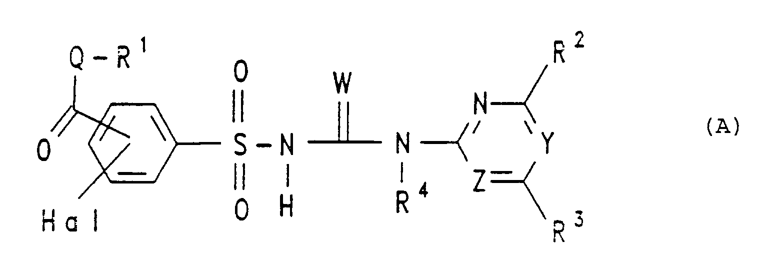 où
Q représente un atome d'oxygène, un atome de soufre ou -N(R)-, R étant égal à H, alkyle en C₁-C₄ ou alkoxy en C₁-C₄,
W un atome d'oxygène ou de soufre
Y, Z indépendamment l'un de l'autre, représentent CH ou N, Y et Z n'étant pas simultanément CH,
R¹ représente un atome d'hydrogène ; des groupes alkyle en C₁-C₁₂ ; alcényle en C₂-C₁₀ ; alcynyle en C₂-C₁₀ ; alkyle en C₁-C₆, gui est non substitué ou substitué une ou plusieurs fois par des restes identiques ou différents pris parmi les atomes d'halogène, les groupes alkoxy en C₁-C₄ ; (alkyl en C₁-C₄)thio ; -CN, (alkoxy en C₂-C₅)carbonyle et alcényle en C₂-C₆ ; cycloalkyle en C₃-C₈ ; qui est non substitué ou substitué par un ou plusieurs restes pris parmi les groupes alkyle en C₁-C₄, alkoxy en C₁-C₄, (alkyl en C₁-C₄)thio et un atome halogène ; cycloalcényle en C₅-C₈ ; phénylalkyle en C₁-C₄ qui est non substitué ou substitué sur le reste phényle ; ou un reste de formules A-1 à A-10, 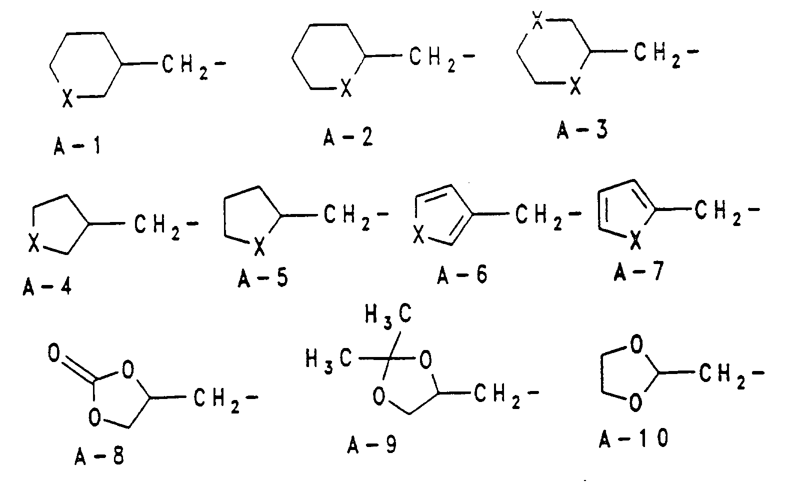 où
X représente O, S, S(O) ou SO₂,
R² représente un atome d'hydrogène, un atome d'halogène, des groupes alkyle en C₁-C₃ ou alkoxy en C₁-C₃, les deux derniers restes cités étant non substitués ou substitués une ou plusieurs fois par des groupes halogène ou alkoxy en C₁-C₃ ;
R³ représente un atome d'hydrogène, un atome d'halogène, des groupes alkyle en C₁-C₃, alkoxy en C₁-C₃ ou (alkyl en C₁-C₃)thio, les 3 derniers restes cités pouvant être non substitués ou substitués une ou plusieurs fois par un atome d'halogène ou un ou deux fois par des groupes alkoxy en C₁-C₃ ou (alkyl en C₁-C₃)thio ; ou un reste de formule NR⁵R⁶, cycloalkyle en C₃-C₆, alcényle en C₂-C₄, alcynyle en C₂-C₄, alcényloxy en C₃-C₄ ou alcynyloxy en C₃-C₆ ;
R⁴ représente un atome d'hydrogène ou un groupe alkyle en C₁-C₄ ;
R⁵ et R⁶, indépendamment l'un de l'autre, représentent un atome d'hydrogène, un groupe alkyle en C₁-C₄, alcényle en C₃-C₄, haloalkyle en C₁-C₄ ou alkoxy en C₁-C₄ et
Hal représente un atome de fluor, de chlore, de brome ou d'iode,
et
B) au moins un composé de formules (B1) et (B2) 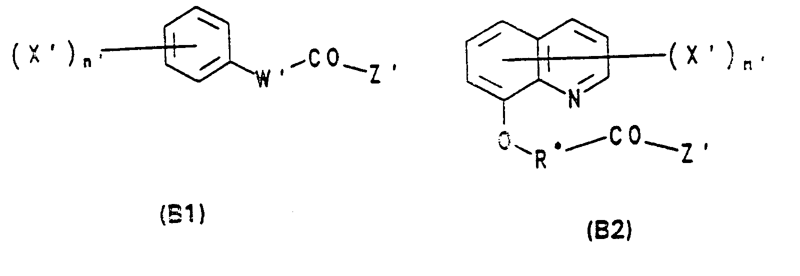 dans lesquelles
X' représente un atome d'hydrogène, un atome d'halogène, des groupes alkyle en C₁-C₄, alkoxy en C₁-C₄, nitro ou halogénoalkyle en C₁-C₄,
Z' représente OR⁷, SR⁷ ou NR⁷R⁸, ou un hétérocycle saturé ou insaturé avec 3 à 7 chaînons avec au moins un atome d'azote et avec jusqu'à 3 hétéroatomes, lequel est relié au groupe carbonyle par l'intermédiaire de l'atome d'azote et est non substitué ou substitué par des restes pris parmi les groupes alkyle en C₁-C₄, alkoxy en C₁-C₄ ou phényle éventuellement substitué,
R* représente une chaîne (alcane en C₁ ou en C₂)-diyle, qui peut être substituée par un ou deux restes alkyle en C₁-C₄ ou (alkoxy en C₁-C₃)-carbonyle,
R⁷ représente un atome d'hydrogène, des groupes alkyle en C₁-C₁₈, cycloalkyle en C₃-C₁₂, alcényle en C₂-C₈ ou alcynyle en C₂-C₈,
les restes carbonés précités étant non substitués ou substitués une ou plusieurs fois par des restes identiques ou différents pris dans le groupe comportant des groupes halogène, hydroxy, alkoxy en C₁-C₈, (alkyl en C₁-C₈)mercapto, (alcényl en C₂-C₈)mercapto, (alcynyl en C₂-C₈)-mercapto, alcényloxy en C₂-C₈, alcynyloxy en C₂-C₈, cycloalkyle en C₃-C₇, cycloalkoxy en C₃-C₇, cyano, mono- et di-(alkyle en C₁-C₄)amino, carboxy, (alkoxy en C₁-C₈) carbonyle, (alcényloxy en C₂-C₈)-carbonyle, (alkyl en C₁-C₈)-mercaptocarbonyle, (alcynyloxy en C₂-C₈)-carbonyle, (alkyl en C₁-C₈)-carbonyle, (alcényl en C₂-C₈)carbonyle, (alcynyl en C₂-C₈)carbonyle, 1-(hydroxyimino)-(alkyle en C₁-C₆), 1-[(alkyl en C₁-C₄)-imino]-(alkyle en C₁-C₄) 1-[(alkoxy en C₁-C₄)-imino]-(alkyle en C₁-C₆), (alkyl en C₁-C₈)carbonylamino, (alcényl en C₂-C₈)carbonylamino, (alcynyl en C₂-C₈)carbonylamino, aminocarbonyle, (alkyl en C₁-C₈)aminocarbonyle, di-(alkyl en C₁-C₆)-aminocarbonyle, (alcényl en C₂-C₆)-aminocarbonyle, (alcynyl en C₂-C₆)aminocarbonyle, (alkoxy en C₁-C₈)-carbonylamino, (alkyl en C₁-C₈)aminocarbonylamino, (alkyl en C₁-C₆)carbonyloxy, qui est non substitué ou substitué par un atome d'halogène, des groupes nitro, alkoxy en C₁-C₄ ou phényle éventuellement substitué, (alcényl en C₂-C₆)-carbonyloxy, (alcynyl en C₂-C₆)carbonyloxy, (alkyl en C₁-C₈)-sulfonyle, phényle, phénylalkoxy en C₁-C₆, phényl(alkoxy en C₁-C₆)carbonyle, phénoxy, phénoxyalkoxy en C₁-C₆, phénoxy(alkoxy en C₁-C₆)-carbonyle, phénylcarbonyloxy, phénylcarbonylamino, phényl(alkyl en C₁-C₆)carbonylamino, les 9 derniers restes cités étant non substitués ou substitués sur le cycle phényle une ou 3 fois par des restes identiques ou différents pris parmi des atomes d'halogène, des groupes alkyle en C₁-C₄, alkoxy en C₁-C₄, halogénoalkyle en C₁-C₄, halogénoalkoxy en C₁-C₄ et nitro, et des restes de formules -SiR'₃, -OSiR'₃, R'₃Si-(alkoxy en C₁-C₈), -CO-O-NR'₂, -O-N=CR'₂, -N=CR'₂, -O-NR'₂, CH(OR')₂ et -O-(CH₂)ₘ-CH(OR')₂, où les R' dans les formules citées, indépendamment l'un de l'autre, représentent un atome d'hydrogène, alkyle en C₁-C₄, phényle qui est non substitué ou substitué une ou plusieurs fois, de préférence jusqu'à 3 fois par des restes identiques ou différents pris parmi des atomes d'halogène, des groupes alkyle en C₁-C₄, alkoxy en C₁-C₄, halogénoalkyle en C₁-C₄, halogénoalkoxy en C₁-C₄ et nitro, ou par paires, forment une chaîne (alcane en C₂-C₆)diyle et m = 0 à 6 et un reste alkoxy substitué de formule R''O-CHR'''(OR'') -alkoxy en C₁-C₆, dans laquelle R'', indépendamment l'un de l'autre, représente alkyle en C₁-C₄ ou ensemble (alcane en C₁-C₆)diyle et R''' représente un atome d'hydrogène ou alkyle en C₁-C₄,
R⁸ représente un atome d'hydrogène, alkyle en C₁-C₆, alkoxy en C₁-C₆ ou phényle éventuellement substitué,
n' est un nombre entier de 1 à 5,
W' représente un reste hétérocyclique bivalent d'une des formules (W1) à (W4) 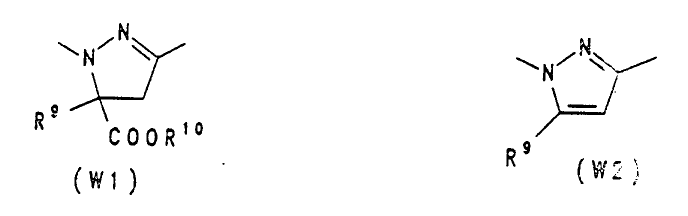 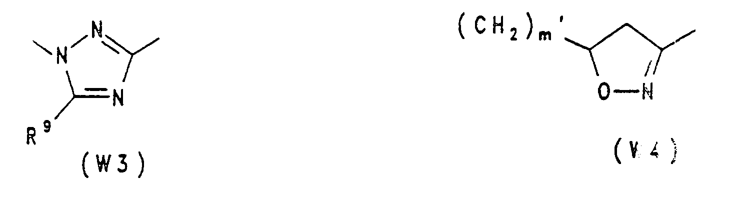
R⁹ représente un atome d'hydrogène, des groupes alkyle en C₁-C₈, halogénoalkyle en C₁-C₈, cycloalkyle en C₃-C₁₂ ou phényle éventuellement substitué et
R¹⁰ représente un atome d'hydrogène, des groupes alkyle en C₁-C₈, halogénoalkyle en C₁-C₈, (alkoxy en C₁-C₄)-alkyle en C₁-C₄, hydroxyalkyle en C₁-C₆, cycloalkyle en C₃-C₁₂ ou tri-(alkyle en C₁-C₄)-silyle et
m vaut 0 ou 1.

2. Combinaison d'herbicide-antidote selon la revendication 1, caractérisée en ce que dans l'herbicide de formule (A) ou son sel
R¹ représente un atome d'hydrogène ; des groupes alkyle en C₁-C₆ ; alcényle en C₂-C₆ ; alcynyle en C₂-C₆ ; alkyle en C₁-C₄, qui est non substitué ou substitué une ou plusieurs fois par des restes identiques ou différents pris parmi les atomes d'halogène, les groupes alkoxy en C₁-C₂ ; (alkyl en C₁-C₂)thio ; (alkoxy en C₂-C₃)carbonyle et alcényle en C₂-C₄ ; cycloalkyle en C₅-C₆ qui est non substitué ou substitué par un ou plusieurs restes pris parmi les groupes alkyle en C₁-C₄, alkoxy en C₁-C₄, (alkyl en C₁-C₄)thio et un atome halogène ; cycloalcényle en C₅-C₆ ; benzyle, qui est non qui est non substitué ou substitué sur le reste phényle par 1 à 3 restes pris dans le groupe comportant des atomes d'halogène, des groupes alkyle en C₁-C₂, alkoxy en C₁-C₂, haloalkyle en C₁-C₂, (alkyl en C₁-C₂)thio et (alkoxy en C₂-C₄)carbonyle, ou un reste des formules A-1 à A-10 citées ci-dessus et
Hal représente un atome de chlore, de brome ou d'iode,
R² représente un atome d'hydrogène, un atome d'halogène, des groupes alkyle en C₁-C₂, alkoxy en C₁-C₂, les deux derniers restes cités étant non substitués ou substitués une ou plusieurs fois par des groupes halogène ou alkoxy en C₁-C₃ ;
R³ représente un atome d'hydrogène, un atome d'halogène, des groupes alkyle en C₁-C₂, alkoxy en C₁-C₂ ou (alkyl en C₁-C₂)thio, les restes alkylés précités pouvant être non substitués ou substitués une ou plusieurs fois par un atome d'halogène ou un ou deux fois par des groupes alkoxy en C₁-C₂ ou (alkyl en C₁-C₂)thio ; ou un reste de formule NR⁵R⁶ ;
R⁴ représente un atome d'hydrogène ou un groupe méthyle et
R⁵ et R⁶, indépendamment l'un de l'autre, représentent un atome d'hydrogène ou un groupe alkyle en C₁-C₂.

3. Combinaison d'herbicide-antidote selon la revendication 1 ou 2, caractérisée en ce que dans le antidote de formule (B1) ou (B2)
R⁷ représente un atome d'hydrogène, des groupes alkyle en C₁-C₈ ou cycloalkyle en C₃-C₇, les restes carbonés précités étant non substitués ou substitués une ou plusieurs fois par des restes pris dans le groupe comportant des groupes hydroxy, alkoxy en C₁-C₄, carboxy, (alkoxy en C₁-C₄)carbonyle, (alcényloxy en C₂-C₆)carbonyle, (alcynyloxy en C₂-C₆)-carbonyle, 1-(hydroxyimino)-(alkyle en C₁-C₄), 1-[(alkyl en C₁-C₄) -imino]-(alkyle en C₁-C₄), 1-[(alkoxy en C₁-C₄)-imino]-(alkyle en C₁-C₄)et des restes de formules -SiR'₃, -O-N=CR'₂, -N=CR'₂ et -C-NR'₂, où les R' dans les formules citées, indépendamment l'un de l'autre, représentent un atome d'hydrogène ou alkyle en C₁-C₄ ou par paires, forment une chaîne (alcane en C₄-C₅)diyle
R⁹ représente un atome d'hydrogène, des groupes alkyle en C₁-C₈, halogénoalkyle en C₁-C₆, cycloalkyle en C₃-C₇ ou phényle et
R¹⁰ représente un atome d'hydrogène, des groupes alkyle en C₁-C₈, halogénoalkyle en C₁-C₈, (alkoxy en C₁-C₄)-alkyle en C₁-C₄, hydroxyalkyle en C₁-C₆, cycloalkyle en C₃-C₇ ou tri-(alkyle en C₁-C₄)silyle et
X' représente un atome d'hydrogène, un atome d'halogène, des groupes méthyle, éthyle, méthoxy, éthoxy, halogénoalkyle (en C₁ ou en C₂).

4. Combinaison d'herbicide-antidote selon l'une des revendications 1 à 3, caractérisée en ce que dans le antidote de formule (B2)
W' représente (W3),
X' représente un atome d'hydrogène, un atome d'halogène ou halogénoalkyle en C₁-C₂,
n' vaut 1,2 ou3,
Z' représente un reste de formule OR⁷,
R⁷ représente un atome d'hydrogène, des groupes alkyle en C₁-C₈, halogénoalkyle en C₁-C₄, hydroxyalkyle en C₁-C₄, cycloalkyle en C₃-C₇, (alkoxy en C₁-C₄)-alkyle en C₁-C₄, tri-(alkyle en C₁-C₂)silyle et
R⁹ représente un groupe alkyle en C₁-C₈ ou halogénoalkyle C₁-C₄.

5. Combinaison d'herbicide-antidote selon l'une des revendications 1 à 4, caractérisée en ce qu'elle est formulée sous forme d'une préparation (agent herbicide) et contient de 0,1 à 95 % en poids de substances actives (A) et (B) et de 1 à 99,9 % en poids d'adjuvants de formulation usuels.

6. Combinaison d'herbicide-antidote selon l'une des revendications 1 à 5, caractérisée en ce qu'elle contient les substances actives (A) et (B) dans un rapport pondéral de 1:100 à 100:1.

7. Procédé pour la protection des plantes de culture contre les effets secondaires phytotoxiques des herbicides (A), caractérisé en ce qu'on applique une quantité efficace d'un antidote du type (B) avant, après ou en même temps que l'herbicide (A) sur les plantes, les parties de plante, la semence ou la surface cultivable, la combinaison de l'herbicide (A) et du antidote (B) étant définie selon l'une des revendications 1 à 6.

8. Procédé selon la revendication 7, caractérisé en ce que les plantes de culture sont les céréales, le riz ou le maïs.

9. Procédé selon la revendication 7 ou 8, caractérisé en ce que l'on applique les composés de formule (A) ou leurs sels dans une concentration d'emploi de 0,001 à 10 kg/ha de substance active et dans un rapport pondéral du antidote:herbicide de 1:100 à 100:1.

10. Utilisation du composé du type (B) comme antidote pour la protection de plantes de culture contre les effets secondaires phytotoxiques des herbicides (A), la combinaison de l'herbicide-antidote étant définie selon l'une des revendications 1 à 6.
